# EUROPEAN PATENT APPLICATION

(11) **EP 1 505 509 A1**
(43) Date of publication of application: **09.02.2005**
(21) Application number: 03725728.4
(22) Date of filing: 02.05.2003
(51) Int. Cl.: G06F 15/00, G06F 12/14, G06F 17/60, H04L 9/32

(54) **INFORMATION PROCESSING DEVICE AND METHOD, INFORMATION PROCESSING SYSTEM, RECORDING MEDIUM, AND PROGRAM**

(30) Priority: 13.05.2002 JP 2002136533
(71) Applicant: Sony Corporation, Tokyo 141-0001 (JP)
(72) Inventor: NAKANO, Takehiko, c/o SONY CORPORATION, Tokyo 141-0001 (JP); KOMURO, Teruyoshi, c/o SONY CORPORATION, Tokyo 141-0001 (JP)
(74) Representative: DeVile, Jonathan Mark, Dr.
(86) International application number: PCT/JP2003/005604
(87) International publication number: WO 2003/096204

(57) **Abstract**

The present invention relates to an information processing apparatus and method, an information processing system, a recording medium and a program in which it is made possible to acquire information without being restricted by device if the right to acquire information circulated via a network is owned. A user terminal 12 sends an electronic ticket that has its own electronic signature to an electronic ticket management server 11, and requests information for accessing a content distribution server 14 that distributes the content corresponding to that electronic ticket. The electronic ticket management server 11 checks the electronic signature and determines whether or not the electronic ticket is legitimate, and when it is legitimate, sends to the user terminal 12 an encryption key for accessing the content distribution server that it stores itself. The user terminal 12 accesses the content distribution server 14 using the received encryption key, and receives distribution of content. The present invention may be applied to a system for distributing content.

## Description

### TECHNICAL FIELD

The present invention relates to an information processing apparatus and method, information processing system, recording medium and program, and more particularly to an information processing apparatus and method, information processing system, recording medium and program in which, in a system where a content provider distributes content, it is made possible to set the price to be paid to the content provider according to evaluations by users who receive distribution of content.

### BACKGROUND ART

Services for distributing music and movie content via networks such as the Internet is beginning to become popular.

In such distribution of music and movie content using networks, first, a user desiring the use of content purchases access rights to the content to be distributed by purchasing from the supplier of the content so-called key data for decrypting encryption. Further, the supplier of the content encrypts the content to be distributed in a method corresponding to the key data, and distributes it to the user. The user decrypts the distributed content using this key data, and reproduces the original content.

However, the key data above is configured such that it can be used by being stored in the device used to access the content supplier when the user made the purchase, and by having that device decrypt the encrypted content using that key data. For this reason it is not possible to transfer just the key data to a device other than the device used in purchasing the key data. As a result, there was a problem in that the user, despite having purchased this key data (in other words, access rights to the content data), for example, cannot access the content using other devices, and, in order to use it with another device, has no choice but to further purchase one more copy of the key data. In addition, because the key data cannot be transferred between devices, there was a problem in that this key data itself could not be exchanged as a gift between users.

### DISCLOSURE OF THE INVENTION

The present invention is made in view of such circumstances, and is one which makes it possible to, by managing just the information of the owner of access rights instead of managing access rights with key data, make access to content free, not restricted by device nor to the purchaser of access rights so long as it is confirmed that it is the person who owns access rights.

A first information processing apparatus of the present invention is characterized in that it comprises storage means for storing an electronic ticket indicating the right to acquire predetermined information, transmission means for transmitting a ticket ID for identifying the electronic ticket and an electronic signature for the ticket ID to another information processing apparatus, reception means for receiving a encryption key for acquiring the predetermined information that is transmitted from the other information processing apparatus based on the ticket ID and the electronic signature, and acquisition means for acquiring the predetermined information using the encryption key received by the receiving means.

It is possible to include in the electronic ticket mentioned above, in addition to the ticket ID, an access information ID for identifying the predetermined information that is acquirable and an electronic signature for the ticket ID or the access information ID.

It is possible to include in the access information ID mentioned above a URL of the predetermined information on the Internet.

It is possible to store in the storage means mentioned above, in addition to the electronic ticket, an electronic signature for the information included in the electronic ticket, and a user certificate including a public key for verifying the electronic signature for the information included in the electronic ticket, a user ID for identifying the owner of the electronic ticket, and an electronic signature for the public key and the user ID. And it is possible to make the transmission means transmit, along with the electronic ticket, the electronic signature and the user certificate to the other information processing apparatus.

It is possible to further provide request means for requesting to the other information processing apparatus that the user ID for identifying the owner of the electronic ticket mentioned above be changed to a user ID of another owner other than the owner.

It is possible to further provide price setting means for setting a price accompanying the change when the request means mentioned above requests to the other information processing apparatus that the user ID for identifying the owner of the electronic ticket be changed to the user ID of the other owner that is different from the owner.

It is possible to make the price setting means mentioned above make the price accompanying the change be the price set by the owner.

It is possible to make the price setting means mentioned above make the price accompanying the change be the price set by the other owner.

Movies or music may be included in the predetermined information mentioned above.

A first information processing method of the present invention is characterized in that it includes a storage step for storing an electronic ticket indicating the right to acquire predetermined information, a transmission step for transmitting to another information processing apparatus a ticket ID for identifying the electronic ticket and an electronic signature for the ticket ID, a reception step for receiving an encryption key for acquiring the predetermined information to be transmitted from the other information processing apparatus based on the ticket ID and the electronic signature, and an acquisition step for acquiring the predetermined information using the encryption key received in the process of the reception step.

A program of a first recording medium of the present invention is characterized in that it includes a storage control step for controlling storage of an electronic ticket indicating the right to acquire predetermined information, a transmission control step for controlling transmission of a ticket ID for identifying the electronic ticket and an electronic signature for the ticket ID to another information processing apparatus, a reception control step for controlling reception of an encryption key for acquiring the predetermined information to be transmitted from the other information processing apparatus based on the ticket ID and the electronic signature, and an acquisition control step for controlling use of the encryption key received in the process of the reception control step and acquisition of the predetermined information.

A first program of the present invention is characterized in that it makes a computer execute an electronic ticket storage control step for controlling storage of an electronic ticket indicating the right to acquire predetermined information, a transmission control step for controlling transmission of a ticket ID for identifying the electronic ticket and an electronic signature for the ticket ID to a first information processing apparatus, a reception control step for controlling reception of an encryption key for acquiring the predetermined information to be transmitted from the first information processing apparatus based on the ticket ID and the electronic signature, and an acquisition control step for controlling use of the encryption key received in the process of the reception control step and acquisition of the predetermined information.

A second information processing apparatus of the present invention is characterized in that it comprises storage means for storing a ticket ID for identifying an electronic ticket and an encryption key that makes it possible to acquire predetermined information corresponding to each ticket ID, reception means for receiving the ticket ID for identifying the electronic ticket and an electronic signature for the ticket ID that are transmitted from another information processing apparatus, determination means for determining whether or not the electronic signature for the ticket ID is legitimate, and transmission means for transmitting to the other information processing apparatus the encryption key that makes acquisition of the predetermined information corresponding to the ticket ID possible based on a determination result by the determination means.

It is possible to include in the electronic ticket mentioned above, in addition to the ticket ID, an access information ID for identifying the predetermined information that is acquirable and an electronic signature for the ticket ID or the access information ID.

It is possible to include in the access information ID mentioned above a URL of the predetermined information on the Internet.

It is possible to include in the electronic ticket mentioned above, in addition to the ticket ID or the electronic signature, a user ID for identifying the owner of the electronic ticket.

It is possible to store in the storage means mentioned above, in addition to the ticket ID for identifying the electronic ticket and the encryption key that makes the acquisition of the predetermined information corresponding to each ticket ID possible, a status of the acquisition of the predetermined information for each ticket ID.

It is possible to further provide status changing means for changing the status of the acquisition of the predetermined information for each ticket ID when the transmission means mentioned above transmits to the other information processing apparatus the encryption key for making the acquisition of the predetermined information corresponding to the ticket ID possible.

When the transmission means transmits to the other information processing apparatus the encryption key for making the acquisition of the predetermined information corresponding to the ticket ID possible, the status changing means mentioned above may, of the statuses of the acquisition of the predetermined information for each ticket ID, change the number of times acquisition is possible.

When the transmission means transmits to the other information processing apparatus the encryption key for making the acquisition of the predetermined information corresponding to the ticket ID possible, the status changing means mentioned above may, of the statuses of the acquisition of the predetermined information for each ticket ID, change the period during which acquisition is possible.

It is possible to store in the storage means mentioned above, in addition to the ticket ID for identifying the electronic ticket and the encryption key that makes acquisition of the predetermined information corresponding to each ticket ID possible, a user ID for identifying, for each ticket ID, the owner thereof.

The user ID may be included in the electronic signature mentioned above. It is possible to further provide checking means for comparing the user ID of the user of the electronic ticket included in the electronic signature and the user ID of the owner of the electronic ticket stored by the storage means, and for checking whether or not the owner and user of the electronic ticket match in accordance with the comparison result.

It is possible to further provide change request reception means for receiving a change request for the user ID of the electronic ticket transmitted from the other information processing apparatus mentioned above, and user ID changing means for changing the user ID of the electronic ticket stored by the storage means to an ID of an owner other than the owner in accordance with the change request.

It is possible to further provide billing means for performing billing based on price information when the change request reception means mentioned above receives, in addition to the change request for the user ID of the electronic ticket, price information related to the change, and when the user ID changing means changes the user ID of the electronic ticket stored by the storage means to an ID of another owner other than the owner.

A second information processing method of the present invention is characterized in that it includes a storage step for storing a ticket ID for identifying an electronic ticket and an encryption key that makes acquisition of predetermined information corresponding to each ticket ID possible, a reception step for receiving the ticket ID for identifying the electronic ticket and an electronic signature for the ticket ID that are transmitted from another information processing apparatus, determination step for determining whether or not the electronic signature for the ticket ID is legitimate, and a transmission step for transmitting to the other information processing apparatus, based on a determination result in the process of the determination step, the encryption key for making the acquisition of the predetermined information corresponding to the ticket ID possible.

A program of a second recording medium of the present invention is characterized in that it includes a storage control step for controlling storage of a ticket ID for identifying an electronic ticket and an encryption key that makes acquisition of predetermined information corresponding to each ticket ID possible, a reception control step for controlling reception of the ticket ID for identifying the electronic ticket and an electronic signature for the ticket ID that are transmitted from another information processing apparatus, determination control step for controlling determination of whether or not the electronic signature for the ticket ID is legitimate, and a transmission control step for controlling transmission to the other information processing apparatus, based on a determination result in the process of the determination control step, of the encryption key for making the acquisition of the predetermined information corresponding to the ticket ID possible.

A second program of the present invention makes a computer execute a storage control step for controlling storage of a ticket ID for identifying an electronic ticket and an encryption key that makes acquisition of predetermined information corresponding to each ticket ID possible, a reception control step for controlling reception of the ticket ID for identifying the electronic ticket and an electronic signature for the ticket ID that are transmitted from another information processing apparatus, determination control step for controlling determination of whether or not the electronic signature for the ticket ID is legitimate, and a transmission control step for controlling transmission to the other information processing apparatus, based on a determination result in the process of the determination control step, of the encryption key for making the acquisition of the predetermined information corresponding to the ticket ID possible.

An information processing system of the present invention is
characterized in that a first information processing apparatus comprises first storage means for storing an electronic ticket indicating the right to acquire predetermined information, first transmission means for transmitting to a second information processing apparatus the ticket ID for identifying the electronic ticket and an electronic signature for the ticket ID, first reception means for receiving an encryption key for acquiring the predetermined information transmitted from the second information processing apparatus based on the ticket ID and the electronic signature, and acquisition means for acquiring the predetermined information using the encryption key received by the first reception means, and in that the second information processing apparatus comprises second storage means for storing the ticket ID for identifying the electronic ticket and the encryption key that makes the acquisition of the predetermined information corresponding to each ticket ID possible, second reception means for receiving the ticket ID for identifying the electronic ticket and the electronic signature for the ticket ID that are transmitted from the first information processing apparatus, determination means for determining whether or not the electronic signature for the ticket ID is legitimate, and second transmission means for transmitting to the first information processing apparatus, based on a determination result of the determination means, the encryption key for making the acquisition of the predetermined information corresponding to the ticket ID possible.

In the first information processing apparatus and method as well as the first program of the present invention, an electronic ticket indicating the right to acquire predetermined information is stored, a ticket ID for identifying the electronic ticket and an electronic signature for the ticket ID are transmitted to another information processing apparatus, an encryption key for acquiring the predetermined information that is transmitted from the other information processing apparatus. based on the ticket ID and the electronic signature is received, the received encryption key is used, and the predetermined information is acquired.

In the second information processing apparatus and method as well as the second program of the present invention, a ticket ID for identifying an electronic ticket and an encryption key that makes acquisition of predetermined information corresponding to each ticket ID possible are stored, the ticket ID for identifying the electronic ticket and the electronic signature for the ticket ID that are transmitted from another information processing apparatus are received, it is judged whether or not the electronic signature for the ticket ID is legitimate, and the encryption key that makes the acquisition of the predetermined information corresponding to the ticket ID possible is transmitted to the other information processing apparatus based on the determination result.

In the information processing system of the present information, by a first information processing apparatus, an electronic ticket indicating the right to acquire predetermined information is stored, a ticket ID for identifying the electronic ticket and an electronic signature for the ticket ID is transmitted to a second information processing apparatus, an encryption key for making acquisition of the predetermined information possible that is transmitted from the second information processing apparatus based on the ticket ID and the electronic signature is received, and the predetermined information is acquired using the received encryption key, and, by a second information processing apparatus, the ticket ID for identifying the electronic ticket and the encryption key that makes the acquisition of the predetermined information corresponding to each ticket ID possible are stored, the ticket ID for identifying the electronic ticket and the electronic signature for the ticket ID that are transmitted from the first information processing apparatus are received, it is judged whether or not the electronic signature for the ticket ID is legitimate, and the encryption key that makes the acquisition of the predetermined information corresponding to the ticket ID possible is transmitted to the first information processing apparatus based on the determination result.

### BRIEF DESCRIPTION OF THE DRAWINGS

FIG. 1 is a block diagram of a content distribution system to which the present invention is applied;
FIG. 2 is a block diagram of the electronic ticket management server in FIG. 1;
FIG. 3 is a block diagram of the user terminal in FIG. 1;
FIG. 4 is a block diagram of the certificate authority server in FIG. 1;
FIG. 5 is a block diagram of the content distribution server in FIG. 1;
FIG. 6 is a block diagram of the billing server in FIG. 1;
FIG. 7 is a functional diagram of the electronic ticket management server in FIG. 2;
FIG. 8 is a diagram illustrating an electronic ticket;
FIG. 9 is a diagram illustrating the configuration of the electronic ticket database in FIG. 7;
FIG. 10 is a functional block diagram of the user terminal in FIG. 3;
FIG. 11 is a functional block diagram of the certificate authority server in FIG. 4;
FIG. 12 is a functional block diagram of the content distribution server in FIG. 5;
FIG. 13 is a functional block diagram of the finance server in FIG. 6;
FIG. 14 is a flow chart illustrating an electronic ticket purchase process;
FIG. 15 is a flow chart illustrating a content distribution process;
FIG. 16 is a block diagram of an electronic ticket management server;
FIG. 17 is a functional block diagram of the electronic ticket management server in FIG. 16;
FIG. 18 is a diagram illustrating the configuration of the electronic ticket database in FIG. 17;
FIG. 19 is a flowchart illustrating an electronic ticket purchase process;
FIG. 20 is a flowchart illustrating a content distribution process;
FIG. 21 is a block diagram of an electronic ticket management server;
FIG. 22 is a block diagram of a user terminal;
FIG. 23 is a functional block diagram of an electronic ticket management server;
FIG. 24 is a diagram illustrating the configuration of the electronic ticket database in FIG. 23;
FIG. 25 is a functional block diagram of a user terminal;
FIG. 26 is a diagram illustrating the configuration of an electronic ticket;
FIG. 27 is a flowchart illustrating an electronic ticket purchase process;
FIG. 28 is a flowchart illustrating a content distribution process;
FIG. 29 is a flowchart illustrating a content distribution process;
FIG. 30 is a block diagram of an electronic ticket management server;
FIG. 31 is a block diagram of a user terminal;
FIG. 32 is a functional block diagram of the electronic ticket management server in FIG. 30;
FIG. 33 is a functional block diagram of the user terminal in FIG. 31;
FIG. 34 is a flowchart illustrating an electronic ticket transfer process by the user terminal in FIG. 31;

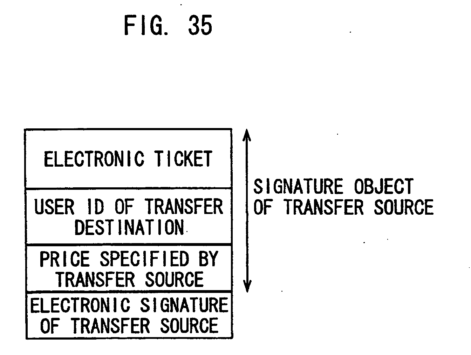

FIG. 35 is a diagram illustrating the configuration of an electronic ticket that is transferred;
FIG. 36 is a flowchart illustrating an electronic ticket transfer process by the user terminal in FIG. 31;
FIG. 37 is a flowchart illustrating an electronic ticket transfer process by the user terminal in FIG. 31;
FIG. 38 is a diagram illustrating the configuration of an electronic ticket that is transferred;
FIG. 39 is a flowchart illustrating a content distribution process by the electronic ticket management server in FIG. 30;
FIG. 40 is a flowchart illustrating a content distribution process by the electronic ticket management server in FIG. 30; and
FIG. 41 is a flowchart illustrating a billing process by a billing server.

### BEST MODES FOR CARRYING OUT THE INVENTION

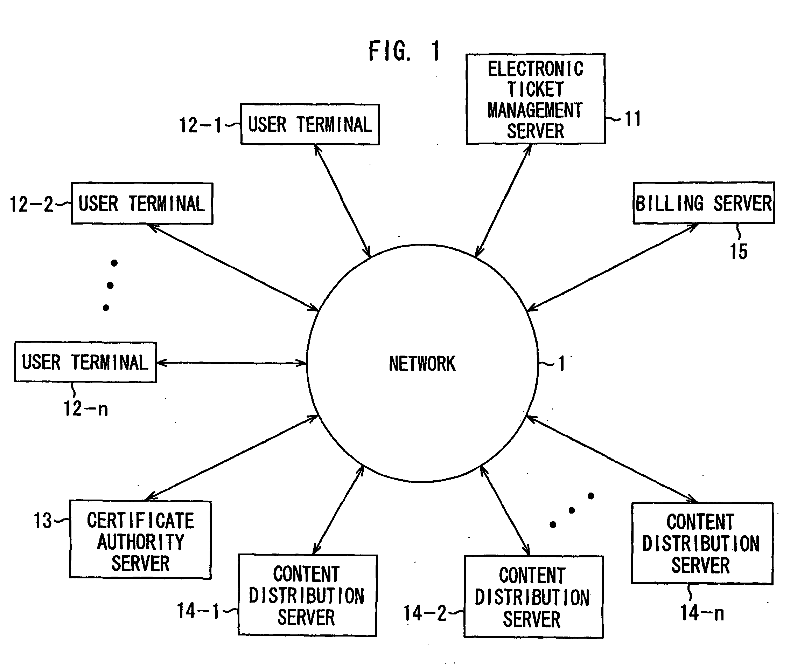

FIG. 1 is a diagram showing the configuration of an embodiment of a content distribution system according to the present invention.

An electronic ticket management server 11 issues and supplies an electronic ticket for each content, such as, for example, music and movies, via a network 1 in response to requests from user terminals 12-1 to 12-n owned by respective users. The electronic ticket management server 11 manages information about users who purchased each electronic ticket, and when there is an access request (content distribution request) to any of content distribution servers 14-1 to 14-n from any of the user terminals 12-1 to 12-n, the electronic ticket management server 11, in accordance with the type of electronic ticket, supplies a encryption key necessary for the acquisition of content. Note that the user terminals 12-1 to 12-n and the content distribution servers 14-1 to 14-n will herein be referred to simply as user terminal(s) 12 and content distribution server(s) 14 where it is unnecessary for them to be identified individually. In addition, hereinafter, other devices will also be referred to in a similar manner.

The user terminals 12-1 to 12-n are terminal apparatuses owned by respective users, and purchase electronic tickets for predetermined content from the electronic ticket management server 11 in accordance with operations by the users, and also access the content distribution servers 14-1 to 14-n distributing the content corresponding to the purchased electronic tickets, and acquire (receive content distribution) and play the content.

The certificate authority server 13 generates an electronic certificate for a public key corresponding to a secret key used by a user of each of the user terminals 12-1 to 12-n, and supplies it to the user terminals 12-1 to 12-n.

The content distribution servers 14-1 to 14-n are servers that are each managed and operated by a vendor that distributes content such as music and movies, and distribute content data to a user terminal 12 that owns an electronic ticket corresponding to each content.

A billing server 15 is a server managed and operated by a financial institution such as a bank or a credit card company, and is a server that performs a billing process necessary for the purchase of electronic tickets or the transferal of electronic tickets in response to requests from the electronic ticket management server 11 or the user terminals 12.

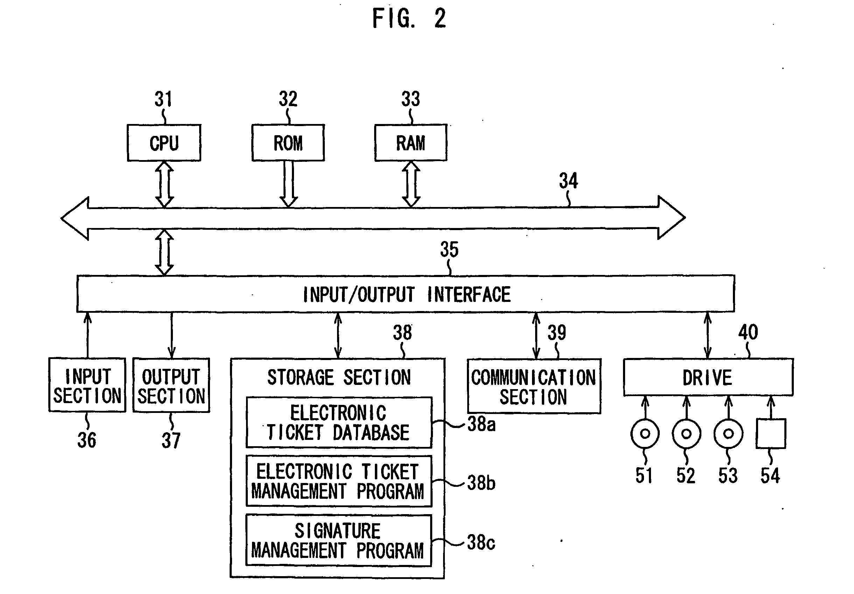

FIG. 2 is a diagram showing the configuration of the electronic ticket management server 11 related to the present invention. A CPU (Central Processing Unit) 31 performs various processes according to data and programs (an electronic ticket database 38a, an electronic ticket management program 38b, and a signature management program 38c) stored in a ROM (Read Only Memory) 32 or a storage section 38. A RAM (Random Access Memory) 33 appropriately stores programs, data and the like executed by the CPU 31. These CPU 31, ROM 32, and RAM 33 are interconnected via a bus 34.

An input/output interface 35 is also connected to the CPU 31 via the bus 34. An input section 36 comprised of a keyboard, a mouse, a microphone and the like, and an output section 37 comprised of a display, speakers and the like are connected to the input/output interface 35. The CPU 31 performs various processes in accordance with commands inputted via the input section 36. And the CPU 31 outputs images, audio and the like obtained as a result of the process to the output section 37.

The storage section 38 connected to the input/output interface 35 is comprised of, for example, a hard disk, and stores programs executed by the CPU 41 and various data. A communication section 39 communicates with external apparatuses via a network shown as the network 1 in FIG. 1, such as, for example, the Internet or other networks.

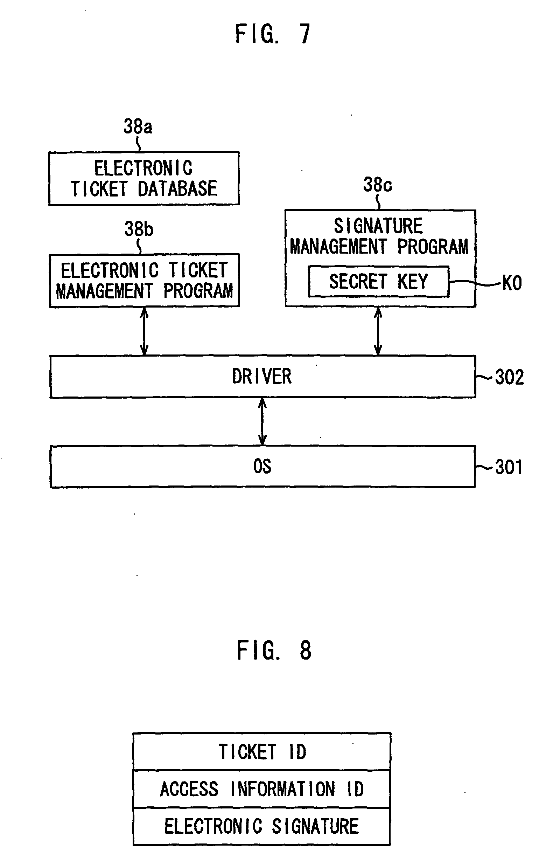

Further, the storage section 38 stores programs such as the electronic ticket database 38a, the electronic ticket management program 38b, the signature management program 38c and the like, and the CPU 31 reads these programs to perform corresponding processes. Furthermore, besides these, the storage section 38 also stores an OS (Operating System) 301 (FIG. 7), which is a basic program, and a driver 302 (FIG. 7). The various programs will be described later with reference to FIG. 7.

Further, the programs to be stored in the storage section 38, besides the above-mentioned, may be acquired via the communication section 39, and be stored in the storage section 38.

A drive 40 connected to the input/output interface 35 drives a magnetic disk 51, an optical disk 52, a magneto-optical disk 53, a semiconductor memory 54 or the like when they are loaded thereinto, and acquires programs, data and the like recorded thereon. The acquired programs and data are transferred to the storage section 38 as necessary and are stored.

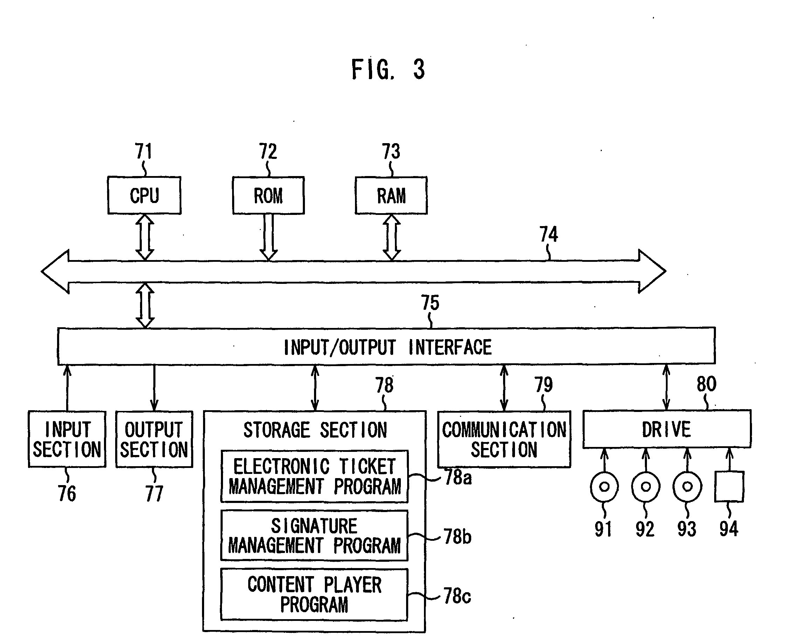

Next, the configuration of the user terminal 12 will be described with reference to FIG. 3. The user terminal 12 is basically similar in configuration to the electronic ticket management server 11 described in connection with FIG. 2. That is, a CPU 71, a ROM 72, a RAM 73, a bus 74, an input/output interface 75, an input section 76, an output section 77, a storage section 78, a communication section 79, a drive 80, a magnetic disk 91, an optical disk 92, a magneto-optical disk 93, and a semiconductor memory 94 of the user terminal 12 correspond to the CPU 31, the ROM 32, the RAM 33, the bus 34, the input/output interface 35, the input section 36, the output section 37, the storage section 38, the communication section 39, the drive 40, the magnetic disk 51, the optical disk 52, the magneto-optical disk 53, and the semiconductor memory 54 of the electronic ticket management server 11 of FIG. 2, and have similar functions.

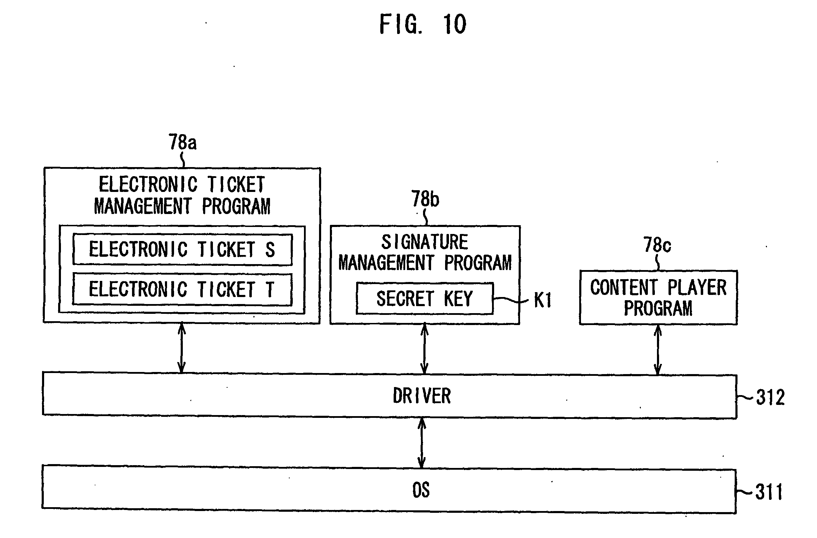

However, programs stored in the storage section 78 differ from the programs stored in the storage section 38 of the electronic ticket management server 11 of FIG. 2. The storage section 78 stores an electronic ticket management program 78a, a signature management program 78b, and a content player program 78c, and the CPU 71 appropriately reads and executes these programs. Further, the storage section 78 also stores an OS 311 (FIG. 10), which is a basic program, and a driver 312 (FIG. 10). The various programs will be described later with reference to FIG. 10.

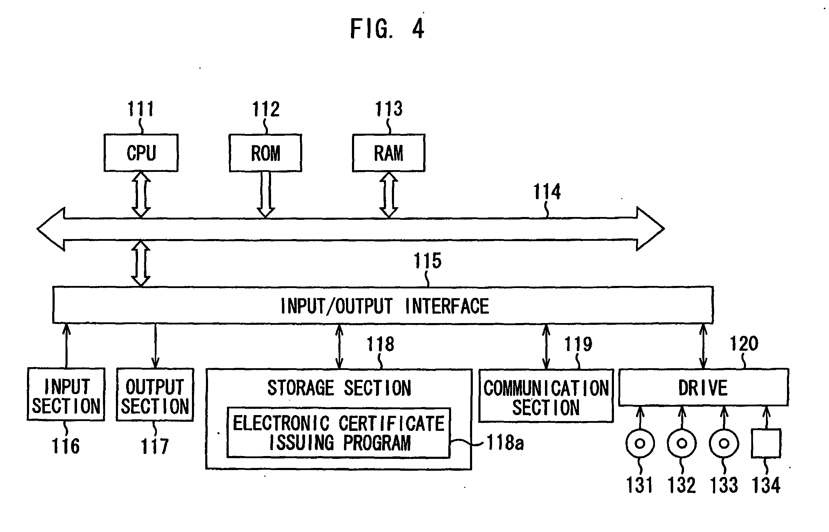

Next, the configuration of the certificate authority server 13 will be described with reference to FIG. 4. The certificate authority server 13 is basically similar in configuration to the electronic ticket management server 11 and the user terminal 12 described in connection with FIG. 2 and FIG. 3. That is, a CPU 111, a ROM 112, a RAM 113, a bus 114, an input/output interface 115, an input section 116, an output section 117, a storage section 118, a communication section 119, a drive 120, a magnetic disk 131, an optical disk 132, a magneto-optical disk 133, and a semiconductor memory 134 of the certificate authority server 13 correspond to the CPU 31, the ROM 32, the RAM 33, the bus 34, the input/output interface 35, the input section 36, the output section 37, the storage section 38, the communication section 39, the drive 40, the magnetic disk 51, the optical disk 52, the magneto-optical disk 53, and the semiconductor memory 54 of the electronic ticket management server 11 of FIG. 2, or the CPU 71, the ROM 72, the RAM 73, the bus 74, the input/output interface 75, the input section 76, the output section 77, the storage section 78, the communication section 79, the drive 80, the magnetic disk 91, the optical disk 92, the magneto-optical disk 93, and the semiconductor memory 94 of the user terminal 12 of FIG. 3, and have similar functions.

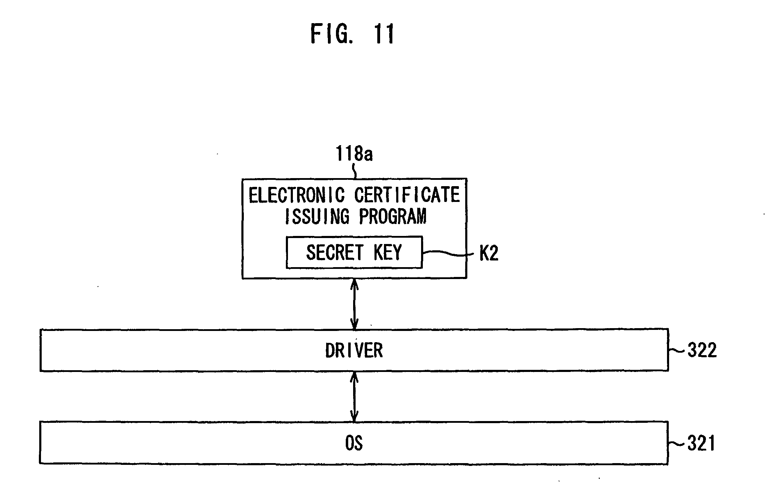

However, programs stored in the storage section 118 differ from the programs stored in the storage section 38 of the electronic ticket management server 11 of FIG. 2 or the storage section 78 of the user terminal 12 of FIG. 3. The storage section 118 stores an electronic certificate issuing program 118a, and the CPU 111 appropriately reads and executes these programs. Further, besides this, the storage section 118 also stores an OS 321 (FIG. 11), which is a basic program, and a driver 322 (FIG. 11). The various programs will be described later with reference to FIG. 11.

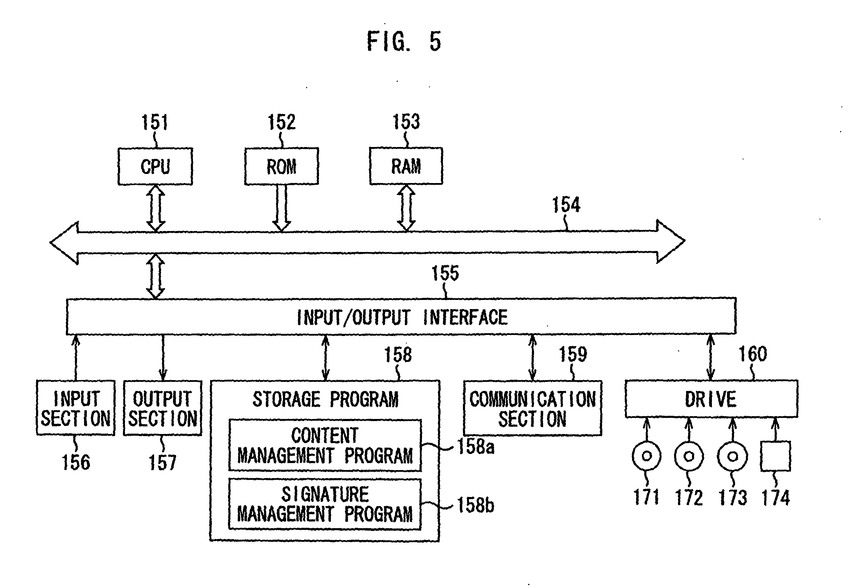

Next, the configuration of the content distribution server 14 will be described with reference to FIG. 5. The content distribution server 14 is basically similar in configuration to the electronic ticket management server 11, the user terminal 12, and the certificate authority server 13 described in connection with FIG. 2 to FIG. 4. That is, a CPU 151, a ROM 152, a RAM 153, a bus 154, an input/output interface 155, an input section 156, an output section 157, a storage section 158, a communication section 159, a drive 160, a magnetic disk 171, an optical disk 172, a magneto-optical disk 173, and a semiconductor memory 174 of the content distribution server 14 correspond to the CPU 31, the ROM 32, the RAM 33, the bus 34, the input/output interface 35, the input section 36, the output section 37, the storage section 38, the communication section 39, the drive 40, the magnetic disk 51, the optical disk 52, the magneto-optical disk 53, and the semiconductor memory 54 of the electronic ticket management server 11 of FIG. 2, the CPU 71, the ROM 72, the RAM 73, the bus 74, the input/output interface 75, the input section 76, the output section 77, the storage section 78, the communication section 79, the drive 80, the magnetic disk 91, the optical disk 92, the magneto-optical disk 93, and the semiconductor memory 94 of the user terminal 12 of FIG. 3, or the CPU 111, the ROM 112, the RAM 113, the bus 114, the input/output interface 115, the input section 116, the output section 117, the storage section 118, the communication section 119, the drive 120, the magnetic disk 131, the optical disk 132, the magneto-optical disk 133, and the semiconductor memory 134 of the certificate authority server 13 of FIG. 4, and have similar functions.

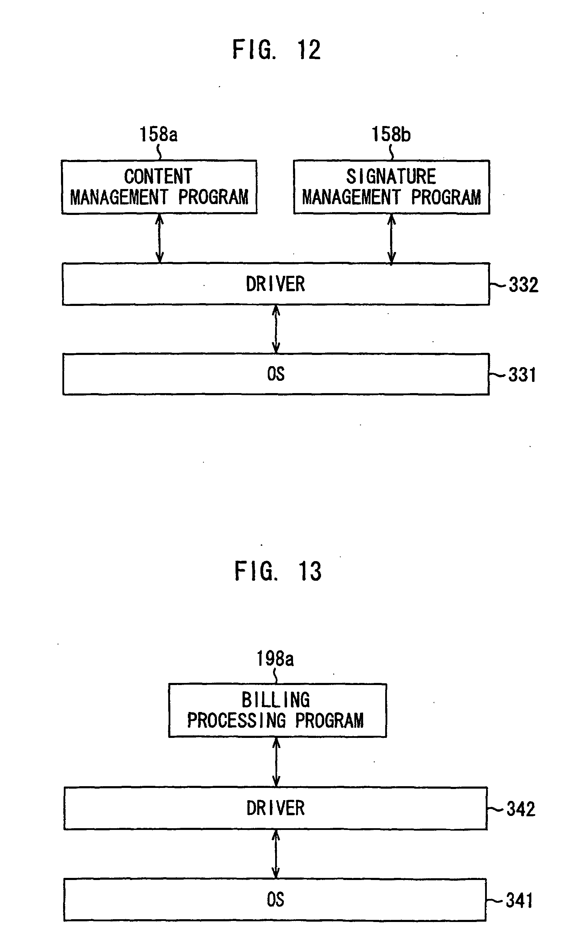

However, programs stored in the storage section 158 differ from the programs stored in the storage section 38 of the electronic ticket management server 11 of FIG. 2, the storage section 78 of the user terminal 12 of FIG. 3, or the storage section 118 of the certificate authority server 13 of FIG. 4. The storage section 158 stores a content management program 158a and a signature management program 158b, and the CPU 151 appropriately reads and executes these programs. Further, besides these, the storage section 158 also stores an OS 331 (FIG. 12), which is a basic program, and a driver 332 (FIG. 12), although not shown in FIG. 5. The various programs will be described later with reference to FIG. 12.

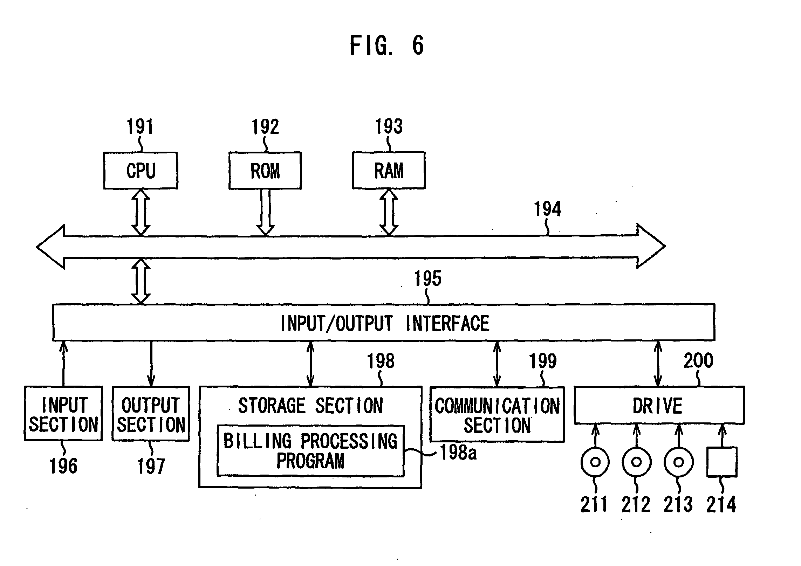

Next, the configuration of the billing server 15 will be described with reference to FIG. 6. The billing server 15 is basically similar in configuration to the electronic ticket management server 11, the user terminal 12, the certificate authority server 13, and the content distribution server 14 described in connection with FIG. 2 to FIG. 5. That is, a CPU 191, a ROM 192, a RAM 193, a bus 194, an input/output interface 195, an input section 196, an output section 197, a storage section 198, a communication section 199, a drive 200, a magnetic disk 211, an optical disk 212, a magneto-optical disk 213, and a semiconductor memory 214 of the billing server 15 correspond to the CPU 31, the ROM 32, the RAM 33, the bus 34, the input/output interface 35, the input section 36, the output section 37, the storage section 38, the communication section 39, the drive 40, the magnetic disk 51, the optical disk 52, the magneto-optical disk 53, and the semiconductor memory 54 of the electronic ticket management server 11 of FIG. 2, the CPU 71, the ROM 72, the RAM 73, the bus 74, the input/output interface 75, the input section 76, the output section 77, the storage section 78, the communication section 79, the drive 80, the magnetic disk 91, the optical disk 92, the magneto-optical disk 93, and the semiconductor memory 94 of the user terminal 12 of FIG. 3, the CPU 111, the ROM 112, the RAM 113, the bus 114, the input/output interface 115, the input section 116, the output section 117, the storage section 118, the communication section 119, the drive 120, the magnetic disk 131, the optical disk 132, the magneto-optical disk 133, and the semiconductor memory 134 of the certificate authority server 13 of FIG. 4, or the CPU 151, the ROM 152, the RAM 153, the bus 154, the input/output interface 155, the input section 156, the output section 157, the storage section 158, the communication section 159, the drive 160, the magnetic disk 171, the optical disk 172, the magneto-optical disk 173, and the semiconductor memory 174 of the content distribution server 14 of FIG. 5, and have similar functions.

However, programs stored in the storage section 198 differ from the programs stored in the storage section 38 of the electronic ticket management server 11 of FIG. 2, the storage section 78 of the user terminal 12 of FIG. 3, the storage section 118 of the certificate authority server 13 of FIG. 4, or the storage section 158 of FIG. 5. The storage section 198 stores a billing process management program 198a, and the CPU 191 appropriately reads and executes these programs. Further, besides this, the storage section 198 also stores an OS 341 (FIG. 13), which is a basic program, and a driver 342 (FIG. 13), although not shown in FIG. 5. The various programs will be described later with reference to FIG. 13.

Next, the functions of the electronic ticket management server 11 will be described with reference to the functional block diagram of FIG. 7. Note that although in the following functional block diagram, functions implemented basically by software are shown, they may also be configured as hardware comprised of, for example, a chip set and the like that perform a function comparable to each software.

The CPU 31 of the electronic ticket management server 11 executes the OS 301, which is its basic software. The OS 301 includes, for example, Windows (registered trademark) xp, ME or 2000 of MicroSoft Corporation or the like. The CPU 31 of the electronic ticket management server 11 executes the above-mentioned electronic ticket database 38a, electronic ticket management program 38b, and signature management program 38c on its OS 301 via the driver 302.

The electronic ticket database 38a is a database that stores for each ticket, when the electronic ticket management program 38b issues an electronic ticket corresponding to a content, a ticket ID for identifying the electronic ticket, an access information ID indicating access destination information for acquiring content to be distributed with the electronic ticket, and information on an encryption key for access used in authentication for access when access is made based on the access information ID.

The electronic ticket management program 38b issues an electronic ticket such as the one shown in FIG. 8. That is, as shown in FIG. 8, the electronic ticket is comprised of a ticket ID, an access information ID, and an electronic signature. The ticket ID is a unique ID identifying the electronic ticket. The access information ID is an ID indicating access destination information for acquiring content to be distributed with the electronic ticket, such as, for example, a URL (Universal Resource Locator) of a content distribution server 14, which is to be the access destination. Further, the access information ID may also include a bank account number or a credit card number of each user of the electronic tickets.

The electronic signature is something in which signature object information (in this case, the ticket ID and the access information ID) or a message digest that is the result obtained by processing information with a hash function is encrypted using a secret key of the server that generates the electronic ticket. In the present case, since the electronic ticket is generated by the electronic ticket management server 11, it is encrypted with a secret key K0 of the electronic ticket management server 11. Further, the electronic signature is decrypted with a public key corresponding to the secret key used at the time of generation, and by being matched against the signature object information or the message digest of the same information, it can be verified that the signature object information has certainly been signed by the owner of the secret key. Hereinafter, it is assumed that verification of an electronic signature refers to such a process of checking signature object information.

Furthermore, the electronic ticket may also include other information, and may include, for example, title, artist name, an icon, an expiration date and the like.

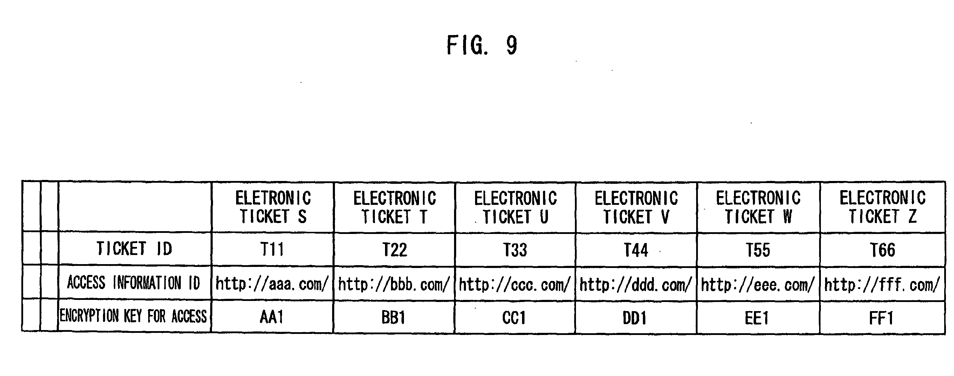

The electronic ticket database 38a is, for example, one in which information on the generated electronic tickets is databased as shown in FIG. 9, and is generated by the electronic ticket management program 38b. In the example of FIG. 9, electronic tickets S to Z are recorded. From the top row in the figure, recorded are ticket name, ticket ID, access destination URL as access information ID, and encryption key for access. In the present case, for ticket S, "T11" is stored as the ticket ID, "http://aaa.com/" as the access destination URL, and "AA1" as the encryption key for access. For ticket T, "T22" is stored as the ticket ID, "http://bbb.com/" as the access destination URL, and "BB1" as the encryption key for access. For ticket U, "T33" is stored as the ticket ID, "http://ccc.com/" as the access destination URL, and "CC1" as the encryption key for access. For ticket V, "T44" is stored as the ticket ID, "http://ddd.com" as the access destination URL, and "DD1" as the encryption key for access. For ticket W, "T55" is stored as the ticket ID, "http://eee.com/" as the access destination URL, and "EE1" as the encryption key for access. For ticket Z, "T66" is stored as the ticket ID, "http://fff.com/" as the access destination URL, and "FF1" as the encryption key for access.

The signature management program 38c, using its own secret key K0, generates an electronic signature for data to be transmitted at the time of various processes. Further, the signature management program 38c acquires a public key corresponding to an electronic signature attached by another user, and decrypts the electronic signature using that public key to determine whether or not the transmitted data is legitimate.

Next, functions of the user terminal 12 will be described with reference to the functional block diagram in FIG. 10.

The CPU 71 of the user terminal 12 executes the OS 311 that is its basic software, and executes the above-mentioned electronic ticket management program 78a, signature management program 78b, and content player program 78c on its OS 311 via the driver 312.

The electronic ticket management program 78a accesses the electronic ticket management server 11 via the network 1, performs a process of purchasing an electronic ticket, and stores the purchased ticket. In the present case, a situation is shown in which the electronic ticket management program 78a purchased tickets S and T corresponding to FIG. 9. The electronic ticket management program 78a accesses the electronic ticket management server 11 in accordance with operations by the user, and requests the provision of information necessary to have content corresponding to the electronic ticket distributed. At this point, the electronic ticket management program 78a accesses the electronic ticket management server 11, attaching, along with the requested electronic ticket, an electronic signature for the electronic ticket and which is generated by a secret key K1 of the signature management program 78b, and requests the provision of information necessary to have content corresponding to the electronic ticket distributed.

Further, the electronic ticket management program 78a acquires information necessary for the distribution of content, such as, for example, an access destination URL and information on the encryption key for access, accesses the content distribution server 14 based on these information, receives the content supplied, and outputs it to the content player program 78c. The content player program 78c plays the content acquired from the electronic ticket management program 78a and outputs it to the output section 77.

Next, functions of the certificate authority server 13 will be described with reference to the functional block diagram of FIG. 11. The CPU 111 of the certificate authority server 13 executes the OS 321 that is its basic software and executes the above-mentioned electronic certificate issuing program 118a on that OS 321 via the driver 322.

The electronic certificate issuing program 118a generates and attaches a corresponding electronic signature to a public key and/or a user ID of a predetermined user terminal 12, and generates an electronic certificate of the user terminal 12. For example, in the case of the user terminal 12 shown in FIG. 10, since a public key K1' (a key for decrypting information encrypted by the secret key K1, and will hereunder be referred to with an ""' added to the number of the secret key) for the secret key K1 is made public, when the generation of an electronic certificate is requested from the user terminal 12, the electronic certificate issuing program 118a generates an electronic signature S1 for the public key K1' and/or the user ID using its own secret key K2, after which it generates an electronic certificate by attaching the electronic signature S1 to the public key K1' and/or the user ID, replies to the user terminal 12, and further makes public a public key (a public key for verifying an electronic certificate) K2' corresponding to the secret key K2. Here, the user ID is information with which a user terminal 12 can be identified, and is assigned by the electronic certificate issuing program 118a when an electronic certificate is generated for the first time. On the other hand, the user terminal 12 makes public the electronic certificate comprised of the public key K1' for its own secret key K1 and/or the user ID and the electronic signature S1. Note that hereinafter, it is assumed that information that is made public, such as, for example, public keys, can be acquired by any device as long as it is connected to the network 1.

Through such a process, in determining whether or not the public key K1' and/or the user ID of the user terminal 12 is legitimate, by acquiring the electronic certificate made public by the user terminal 12 and extracting the electronic signature S1, and by verifying if the electronic signature S1 corresponds to the public key K1' and/or the user ID using the public key K2 made public by the certificate authority server 13, a third party can judge that the public key K1' made public by the user terminal 12 and/or the user ID is legitimate.

Next, functions of the content distribution server 14 will be described with reference to the functional block diagram of FIG. 12. The CPU 151 of the content distribution server 14 executes the OS 331 that is its basic software, and executes the above-mentioned content management program 158a and signature management program 158b on that OS 331 via the driver 332.

The content management program 158a distributes content based on an access request from the user terminal 12. More specifically, the content management program 158a distributes (supplies) predetermined content in response to access from the user terminal 12.

The signature management program 158b acquires a public key corresponding to an electronic signature attached by another user, decrypts the electronic signature with that public key, and determines whether or not the transmitted data is legitimate.

Next, functions of the billing server 15 will be described with reference to the functional block diagram of FIG. 13. The CPU 191 of the billing server 15 executes the OS 341 that is its basic software, and executes the above-mentioned billing processing program 198a on that OS 341 via the driver 342.

The billing processing program 198a performs, based on a request from the electronic ticket management server 11, a billing process for a price related to the use of an electronic ticket circulating between user terminals 12 or between a user terminal 12 and a content distribution server 14.

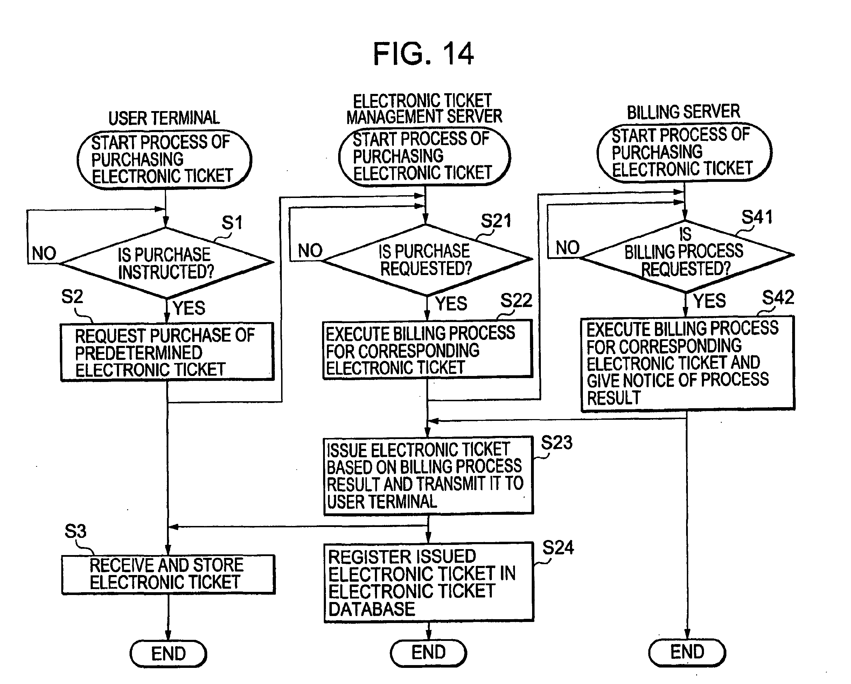

Next, a process performed when the user terminal 12 purchases an electronic ticket from the electronic ticket management server 11 will be described with reference to the flowchart of FIG. 14.

In step S1, the electronic ticket management program 78a determines whether or not purchase of an electronic ticket is instructed, and repeats that process until purchase of an electronic ticket is instructed. If, for example, it is determined in step S1 that the user has instructed the purchase of a desired electronic ticket by operating the input section 76, the process proceeds to step S2.

In step S2, the electronic ticket management program 78a controls the communication section 79, and transmits via the network 1 a request to purchase the electronic ticket for which purchase has been instructed to the electronic ticket management server 11.

In step S21, the electronic ticket management program 38b of the electronic ticket management server 11 controls the communication section 39, determines whether or not purchase of an electronic ticket is requested, and repeats that process until it is determined that purchase of an electronic ticket is requested. If, for example, the request to purchase the electronic ticket is transmitted from the electronic ticket management program 78a of the user terminal 12 through the process of step S2 as mentioned above, the process proceeds to step S22.

In step S22, the electronic ticket management program 38b of the electronic ticket management server 11 controls the communication section 39, accesses the billing server 15 via the network 1, requests a billing process related to the price for the electronic ticket from an account of the user terminal 12 from which there was a purchase request, and makes it be executed.

In step S41, the billing processing program 198a controls the communication section 199, determines whether or not a billing process for an electronic ticket is requested, and repeats that process until billing is requested. If, for example, it is determined that a billing process is requested through the process of step S22, the billing processing program 198a performs a billing process for the corresponding electronic ticket in step S42, and sends the process result to the electronic ticket management server 11.

In step S23, the electronic ticket management program 38b of the electronic ticket management server 11 issues an electronic ticket for which purchase of the electronic ticket was desired, controls the communication section 39, and transmits it to the user terminal 12 via the network 1. More specifically, the electronic ticket management program 38b, as shown in FIG. 8, causes the signature management program 38c to generate, using its own secret key K0, an electronic signature for the ticket ID of the electronic ticket and the access information ID indicating the access destination of the content distribution server 14 that distributes the requested content, issues the electronic ticket comprised thereof, and transmits it to the user terminal 12.

In step S3, the electronic ticket management program 78a receives the electronic ticket transmitted from the electronic ticket management server 11, and stores it in the storage section 78.

On the other hand, in step S24, the electronic ticket management program 38b of the electronic ticket management server 12 registers the ticket ID and the access information ID of the issued electronic ticket in the electronic ticket database 38a.

Thus, in the present case, for example, since the electronic tickets S and T are purchased as shown in FIG. 10, the corresponding electronic ticket information is registered as the electronic tickets S and T shown in FIG. 9. Further, in this example, when an electronic ticket is thus registered in the electronic ticket database 38a, that electronic ticket is judged to be a valid (usable) electronic ticket.

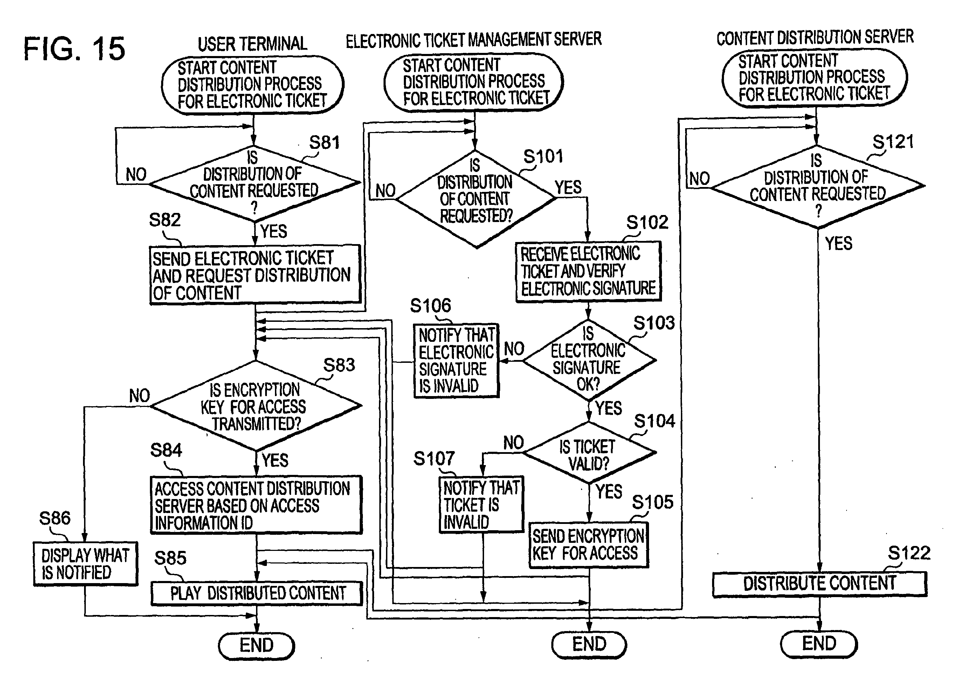

Next, a content distribution process using an electronic ticket will be described with reference to the flowchart of FIG. 15.

In step S81, the electronic ticket management program 78a determines whether or not distribution of content is requested, and repeats that process until distribution of content is requested. If, for example, the user requests distribution of content corresponding to the electronic ticket S in FIG. 10 by operating the input section 76 in step S81, the process proceeds to step S82.

In step S82, the electronic ticket management program 78a outputs the electronic ticket S to the electronic ticket management server 11, and requests distribution of the content corresponding to the electronic ticket S.

In step S101, the electronic ticket management program 38b determines whether or not distribution of content is requested, and repeats the process until distribution of content is requested. If, for example, distribution of content is requested through the process of step S82, it is determined that distribution of content is requested, and the process proceeds to step S102.

In step S102, the electronic ticket management program 38b receives the electronic ticket transmitted from the user terminal 12, and, further, causes the signature management program 38c to check the electronic signature of the electronic ticket.

In step S103, the signature management program 38b determines whether or not the electronic signature of the electronic ticket is correct. More specifically; the signature management program 38c acquires a public key K0' (in the present case, since electronic ticket S is issued by the electronic ticket management server 11 itself, it is the public key K0' made public by itself) corresponding to the secret key K0 and which is made public, decrypts the electronic signature for the electronic ticket using that public key K0', makes a comparison to see if the obtained data is identical with the electronic ticket S or not, and judges the electronic signature to be correct, for example, when both are identical. Then, the process proceeds to step S104.

In step S104, the electronic ticket management program 38b determines whether or not the electronic ticket transmitted from the user terminal 12 is valid, that is, whether or not it is an electronic ticket registered in the electronic ticket database 38a. In the present case, since it is the electronic ticket S, and hence is a registered electronic ticket as shown in FIG. 9, it is judged to be valid, and the process proceeds to step S105.

In step S105, the electronic ticket management program 38b reads the electronic ticket database 38a, reads an encryption key for access necessary to access the content distribution server 14 corresponding to the content for which there is currently a request for distribution, and controls the communication section 39 to transmit it to the user terminal 12 via the network 1. In the present case, since the electronic ticket S has been transmitted from the user terminal 12, the encryption key for access "AA1" corresponding to the electronic ticket S as shown in FIG. 9 will be transmitted to the user terminal 12.

In step S83, the electronic ticket management program 78a determines whether or not an encryption key for access is transmitted from the electronic ticket management server 11. In the present case, since the encryption key for access "AA1" corresponding to the electronic ticket S has been transmitted, it is determined that an encryption key for access is transmitted, and the process proceeds to step S84.

In step S84, the electronic ticket management program 78a accesses the content distribution server 14 based on the access information ID contained in the electronic ticket, and requests distribution of content.

In step S121, the content management program 158a of the content distribution server 14 determines whether or not distribution of content is requested, and repeats the process until distribution of content is requested. In the present case, since distribution of content is requested through the process of step S84, it is determined that distribution of content is requested, and thus the process proceeds to step S122.

In step S122, the content management program 158a distributes to the user terminal 12 the content for which there was a distribution request. Note that in order to prevent unauthorized access from any party other than the legitimate user terminal 12, it is possible to have the user terminal 12 send an encryption key for access to the content to the content distribution server 14, and have the content management program 158a of the content distribution server 14 determine whether or not the encryption key for access transmitted from the user terminal 12 is correct, and permit the user terminal 12 to access itself when it is determined to be correct, to distribute to the user terminal 12 the content for which there was a distribution request.

In step S85, the content player program 78c plays the content distributed from the content distribution server 14, and outputs it to the output section 77. If, for example, the content is a movie, it displays images and outputs audio, and if the content is music, it outputs audio.

If it is determined in step S103 that the electronic signature is not correct, the process proceeds to step S106, where the electronic ticket management program 38b notifies the user terminal 12 that the electronic ticket is invalid.

In step S83, since, through the process of step S103, the encryption key for access is not sent, the process proceeds to step S86, where the electronic ticket management program 78a causes the output section 77 to output (display) what is notified, that is, that the electronic signature is not correct in the present case.

If, in step S104, the ticket is not valid, that is, the electronic ticket transmitted from the user terminal 12 is not registered in the electronic ticket database 38a, the process proceeds to step S107.

In step S107, the electronic ticket management program 38b notifies the user terminal 12 that the electronic ticket is invalid.

In this case, it is notified in step S83 that the electronic ticket is invalid, and thus the fact that the electronic ticket is invalid is outputted (displayed) in step S86.

Through such a process, using an electronic signature-attached electronic ticket that is hard to tamper with, it is possible to permit only the user terminal 12 having the electronic ticket to access the content distribution server 14, and safe distribution of electronic content can be made possible. Note that in the process of step S105, as a method of transmitting an encryption key for access that is required for access, it is possible to safely send the encryption key for access by, for example, acquiring an electronic certificate, described later, from the user terminal 12, encrypting the encryption key for access using the public key contained therein and sending it to the user terminal 12. This method may also be used for the transmission of an encryption key from the user terminal 12 to the content distribution server 14, mentioned in connection with the process of step S122.

Next, a content distribution system where the number of times usable is set for an electronic ticket will be described.

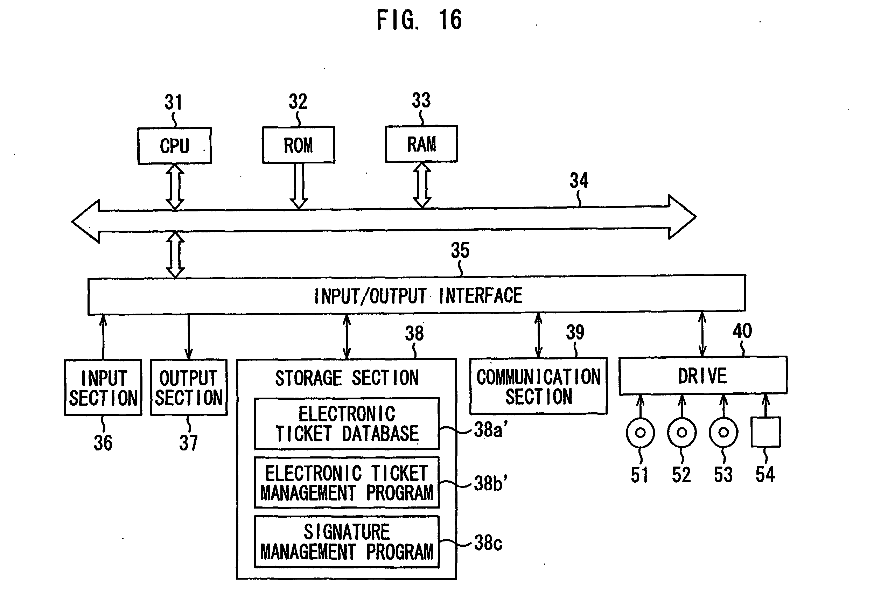

FIG. 16 shows the configuration of an electronic ticket management server 11 in which the number of times usable is set for an electronic ticket and this number is managed. Note that in FIG. 16, parts corresponding to those of the electronic ticket management server 11 of FIG. 2 are given the same reference symbols, and that descriptions thereof will hereinafter be omitted where appropriate.

The electronic ticket management server 11 of FIG. 16 is similar to the electronic ticket management server 11 of FIG. 2 in its basic configuration, but differs in that an electronic ticket database 38a' and an electronic ticket management program 38b' are stored in place of the electronic ticket database 38a and the electronic ticket management program 38b stored in the storage section 38.

The electronic database 38a' is similar to the electronic ticket database 38a in its basic structure, but further stores, for each electronic ticket, remaining count data indicating the number of times usable.

The electronic ticket management program 38b' is basically similar to the electronic ticket management program 38b, but further records the remaining count indicating the number of times usable, which is information that is newly added in the above-mentioned electronic ticket database 38a', when the electronic ticket is registered, and also decrements the remaining count by 1 at every request for distribution of content.

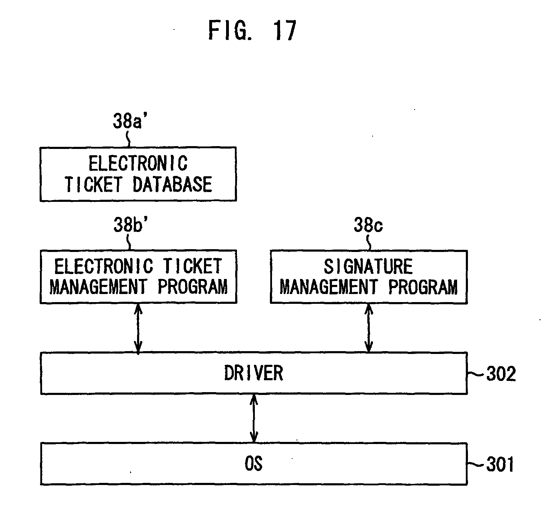

Next, functions of the electronic ticket management server 11 shown in FIG. 16 will be described with reference to the functional block diagram of FIG. 17.

While the basic functions are similar to the functions of the electronic ticket management server 11 shown in FIG. 7, functions of the electronic ticket database 38a' and the electronic ticket management program 38b' in place of the electronic ticket database 38a and the electronic ticket management program 38b are provided.

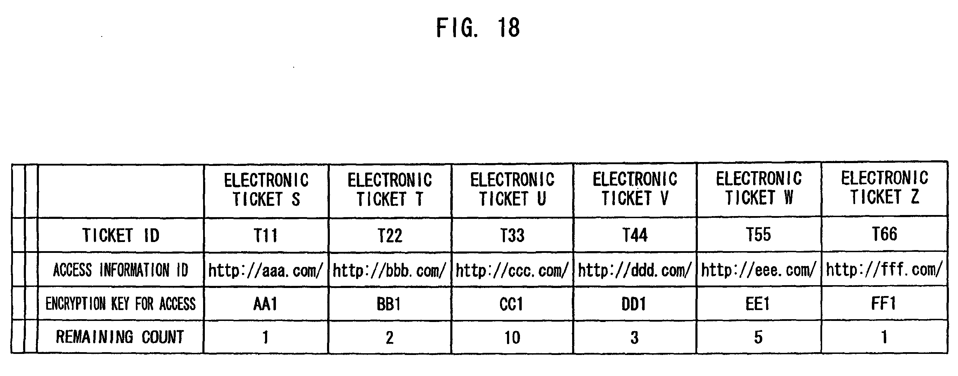

The electronic ticket database 38a' is similar to the electronic ticket database 38a in its basic structure, but, for each electronic ticket, it stores, for example, remaining count data indicating the number of times usable, as shown in FIG. 18. In the present case, in addition to the information in the electronic ticket database 38a shown in FIG. 9, the remaining count is stored, and a remaining count of 1 for the electronic ticket S, a remaining count of 2 for the electronic ticket T, a remaining count of 10 for the electronic ticket U, a remaining count of 3 for the electronic ticket V, a remaining count of 5 for the electronic ticket W, and a remaining count of 1 for the electronic ticket Z are each stored. While this remaining count is to be recorded by the electronic ticket management program 38b' when an electronic ticket is newly registered, this count may also be recorded as something that corresponds to a payment on an electronic ticket, or a default value may be set and that number may be recorded. Further, the electronic ticket management program 38b' updates (decrements by 1) the remaining count at every request for distribution of content from the user terminal 12, and deletes the electronic ticket information when the remaining count eventually reaches zero. By having the electronic ticket information thus deleted, that electronic ticket, in effect, is made invalid.

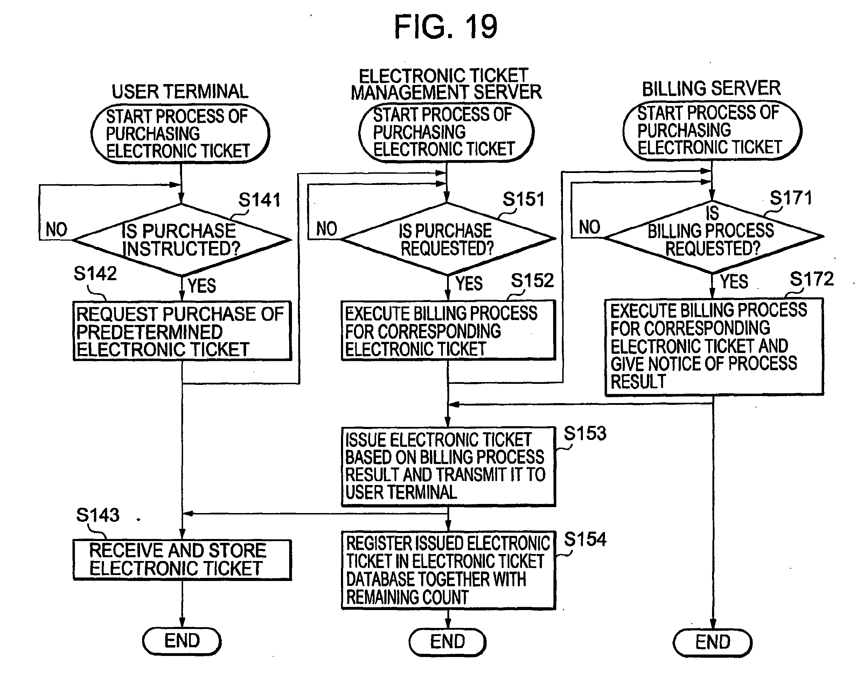

Next, a process of purchasing an electronic ticket where the number of times usable is set for the electronic ticket will be described with reference to the flowchart of FIG. 19.

Since the processes of steps S141 to 143, steps S151 to S153, and steps S171 and S172 are similar to the processes of steps S1 to S3, steps S21 to S23, and steps S41 and S42 described with reference to the flowchart of FIG. 14, descriptions thereof will be omitted.

In step S154, the electronic ticket management program 38b' of the electronic ticket management server 12 registers remaining count information in the electronic ticket database 38a' in addition to the ticket ID and the access information ID of the issued electronic ticket. Through such a process, the electronic ticket database 38a' such as the one shown in FIG. 18 is generated, and the remaining count for the electronic ticket S is recorded as "1."

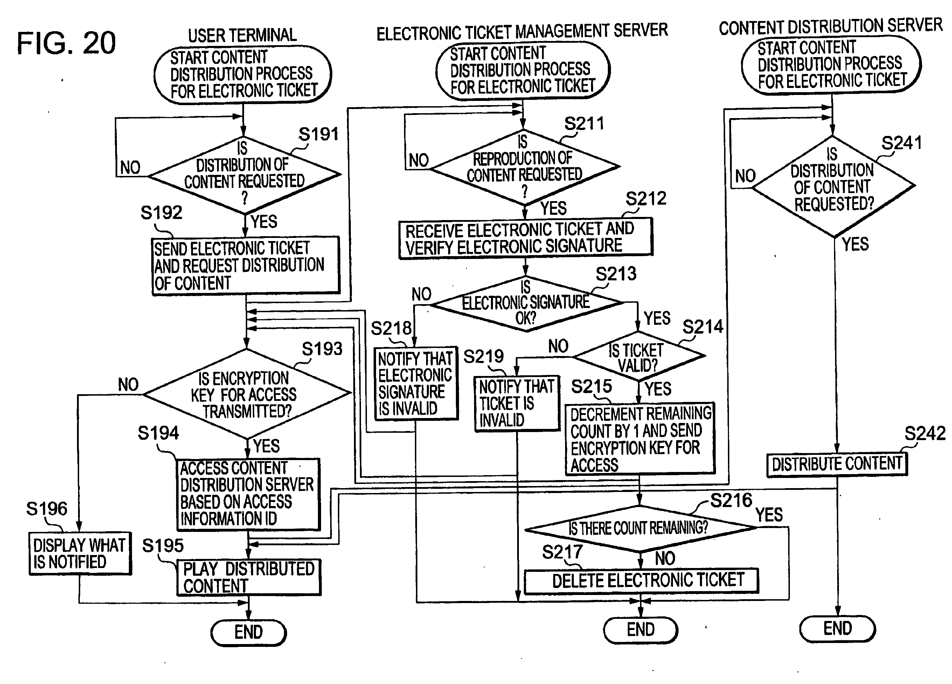

Next, a content distribution process where the number of times usable is set for an electronic ticket will be described with reference to the flowchart of FIG. 20.

Since the processes of steps S191 to S196, steps S211 to S214, S218 and S219, and steps S241 and S242 are similar to the processes of steps S81 to S86, steps S101 to S104, S106 and S107, and steps S121 and S122 described with reference to the flowchart of FIG. 15, descriptions thereof will be omitted.

In step S215, the electronic ticket management program 38b' reads the electronic ticket database 38a' to read an encryption key for access necessary to access the content distribution server 14 corresponding to the content for which there currently is a request for distribution, and controls the communication section 39 to transmit it to the user terminal 12 via the network 1, while also decrementing the remaining count by 1.

In the present case, since the electronic ticket S has been transmitted from the user terminal 12, the encryption key AA1 for access corresponding to the electronic ticket S, as shown in FIG. 9, will be transmitted to the user terminal 12. Further, through this process, the remaining count of the electronic ticket S, which is 1 as shown in FIG. 18, is decremented by 1 and becomes zero.

In step S216, the electronic ticket management program 38b' determines whether or not there is a count remaining for that ticket, that is, whether or not access rights are still left, and if there is no count remaining, the process proceeds to step S217.

In the present case, since the remaining count for the electronic ticket S is zero as mentioned above, it is determined that there is no count remaining, and in step S217, the electronic ticket management program 38b' deletes information on the electronic ticket S in the electronic ticket database 38a'. Further, if it is determined in step S216 that there is a count remaining, step S217 will be skipped.

Through such a process, using an electronic signature-attached electronic ticket that is hard to tamper with, it is possible to permit only the user terminal 12 having the electronic ticket to access the content distribution server 14, and to make safe distribution of electronic content possible. Further, by performing a process that takes the number of times an electronic ticket is usable into account, a content distribution process in line with the price for an electronic ticket can be performed.

Further, while, in the example above, a case where the number of times usable is stored as the remaining count has been described, other restrictions on usage may also be managed. For example, a period from a time at which content is utilized for the first time or the like may also be managed besides the number of times usable.

Next, a content distribution system where a user ID identifying an individual user is registered at the time the electronic ticket is registered in the electronic ticket management server 11 (when the electronic ticket is purchased by the user terminal 12), and where it is made possible to identify individual users of the electronic tickets will be described.

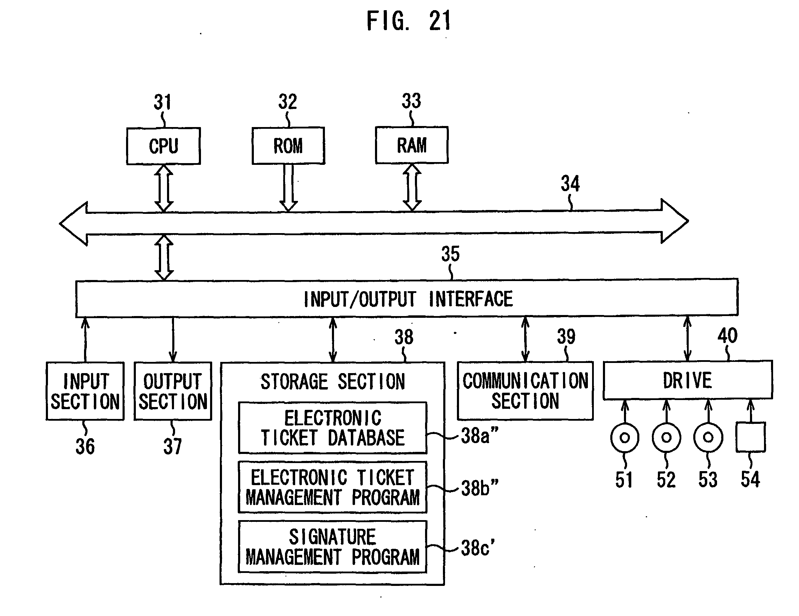

FIG. 21 shows the configuration of an electronic ticket management server 11 where a user ID identifying an individual user is registered when an electronic ticket is registered as described above. Note that in FIG. 21, parts corresponding to the electronic ticket management server 11 of FIG. 2 or FIG. 16 are given the same reference symbols, and that descriptions thereof will hereinafter be omitted where appropriate.

The electronic ticket management server 11 of FIG. 21 is similar to the electronic ticket management server 11 of FIG. 16 in its basic configuration, but differs in that an electronic ticket database 38a", an electronic ticket management program 38b", and a signature management program 38c' are stored in place of the electronic ticket database 38a', the electronic ticket management program 38b', and the signature management program 38c stored in the storage section 38.

The electronic ticket database 38a" is similar to the electronic ticket database 38a' in its basic structure, but further stores, for each electronic ticket, user ID information identifying a user that who the electronic ticket.

The electronic ticket management program 38b" is basically similar to the electronic ticket management program 38b', but further records the user ID information, which is information that is newly added to the above-mentioned electronic ticket database 38a" when the electronic ticket is registered.

The signature management program 38c' is basically similar to the signature management program 38c, but further acquires over the network 1 a public key, which is for checking an electronic certificate, corresponding to an electronic certificate issued by the certificate authority server 13, and checks the legitimacy of the public key and the user ID contained in the electronic certificate by verifying an electronic signature therefor.

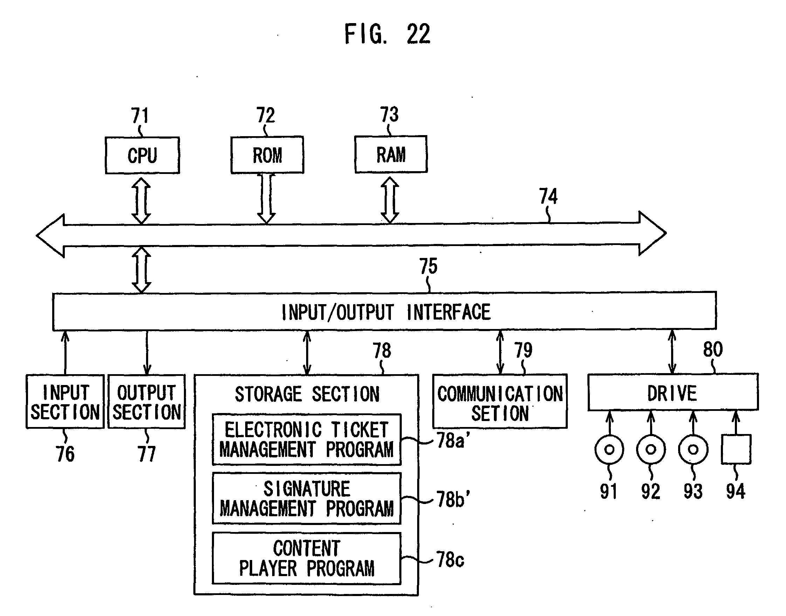

FIG. 22 shows the configuration of a user terminal 12 in a case where a user ID identifying an individual user is registered when an electronic ticket is registered as described above. Note that in FIG. 22, parts corresponding to the user terminal 12 of FIG. 3 are given the same reference symbols, and that descriptions thereof will hereinafter be omitted where appropriate.

The user terminal 12 of FIG. 22 is similar to the user terminal 12 of FIG. 3 in its basic configuration, but differs in that an electronic ticket management program 78a' and a signature management program 78b' are stored in place of the electronic ticket management program 78a and the signature management program 78b stored in the storage section 78.

The electronic ticket management program 78a' is basically similar to the electronic ticket management program 78 of FIG. 3, but further, it also sends user ID information to the electronic ticket management server 11 when an electronic ticket is purchased.

The signature management program 78b' is basically similar to the signature management program 78b of FIG. 3, but further acquires in advance an electronic certificate from the certificate authority server 13 and attaches it in purchasing an electronic ticket or in requesting distribution of content using an electronic ticket.

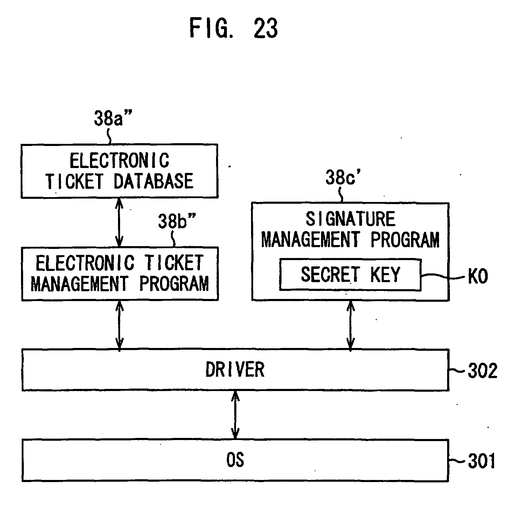

Next, functions of the electronic ticket management server 11 of FIG. 21 will be described with reference to the functional block diagram of FIG. 23.

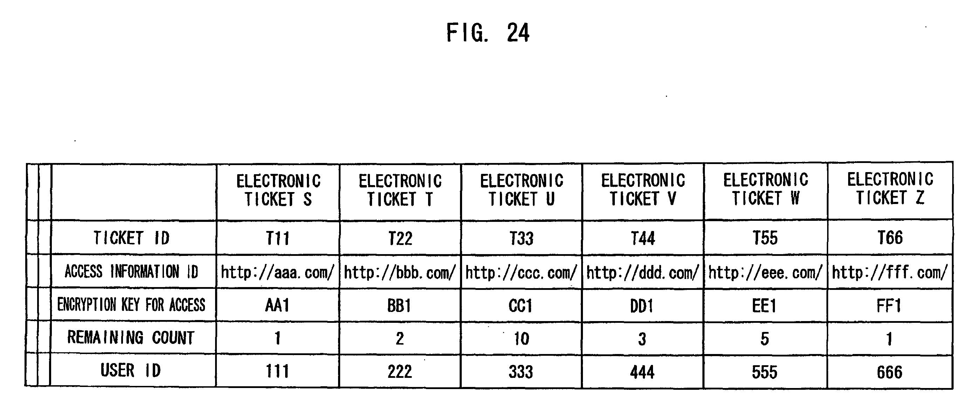

The electronic ticket database 38" is similar to the electronic ticket database 38a' of FIG. 18 in its basic structure, but, as shown in FIG. 24, further stores, for each electronic ticket, user ID information identifying a user that owns the electronic ticket. That is, in the case of FIG. 24, there are stored "111" as the user ID for the electronic ticket S, "222" as the user ID for the electronic ticket T, "333" as the user ID for the electronic ticket U, "444" as the user ID for the electronic ticket V, "555" as the user ID for the electronic ticket W, and "666" as the user ID for the electronic ticket Z.

The electronic ticket management program 38b" is basically similar to the electronic ticket management program 38b', but further records the user ID information, which is information newly added to the above-mentioned electronic ticket database 38a", when an electronic ticket is registered. Further, it accesses the electronic ticket database 38a" to read the user ID corresponding to the ticket ID of the electronic ticket in the process of checking an electronic certificate for the signature management program 38c'.

The signature management program 38c' is basically similar to the signature management program 38c, but further acquires over the network 1 a public key, which is for checking an electronic certificate, corresponding to an electronic certificate issued by the certificate authority server 13, and checks the legitimacy of the public key and the user ID contained in the electronic certificate sent from the user terminal 12 together with the electronic ticket by verifying the electronic signature therefor.

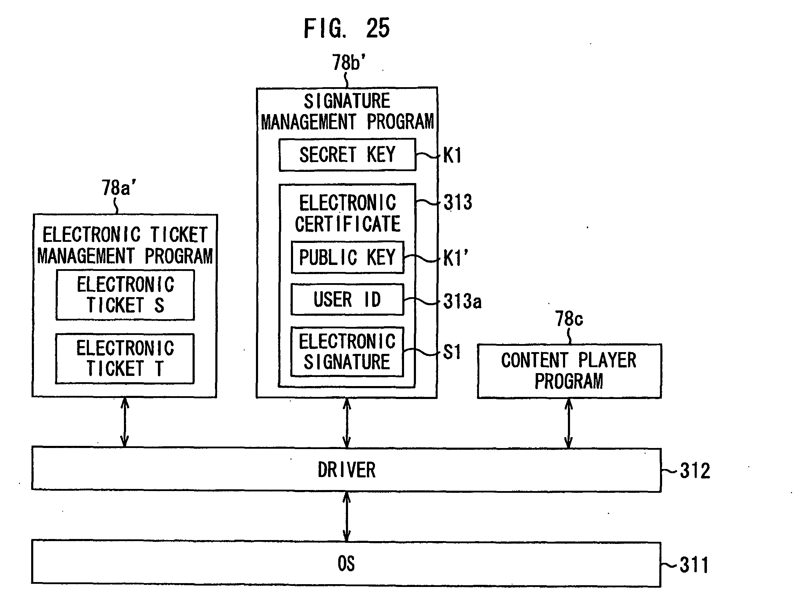

Next, functions of the user terminal 12 realized by the user terminal 12 of FIG. 22 will be described with reference to the functional block diagram of FIG. 25.

While the basic functions of the user terminal 12 of FIG. 25 are similar to the functions of the user terminal 12 shown in FIG. 10, functions of the electronic ticket management program 78a' and the signature management program 78b' in place of the electronic ticket management program 78a and the signature management program 78b are provided.

The electronic ticket management program 78a' is similar to the electronic ticket management program 78a in its basic structure, but further, in purchasing an electronic ticket as described above, adds a user ID to the information mentioned above, and transmits it to the electronic ticket management server 11.

As shown in FIG. 25, the signature management program 78b' acquires in advance an electronic certificate 313 from the certificate authority server 13 in addition to the secret key K1 mentioned above, stores it in the storage section 78, and attaches it and transmits it to the electronic ticket management server 11 when receiving content distribution utilizing the electronic ticket.

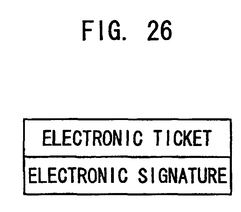

More specifically, when the electronic ticket management program 78a' sends the electronic ticket to the electronic ticket management server 11 to request distribution of content, the signature management program 78b' generates an electronic signature with its own secret key K1 for the electronic ticket to be transmitted, and attaches it to the electronic ticket as shown in FIG. 26. Further, the signature management program 78b' attaches an electronic certificate to the electronic ticket so formed as shown in FIG. 26, and the electronic ticket management program 78a' transmits this to the electronic ticket management server 11.

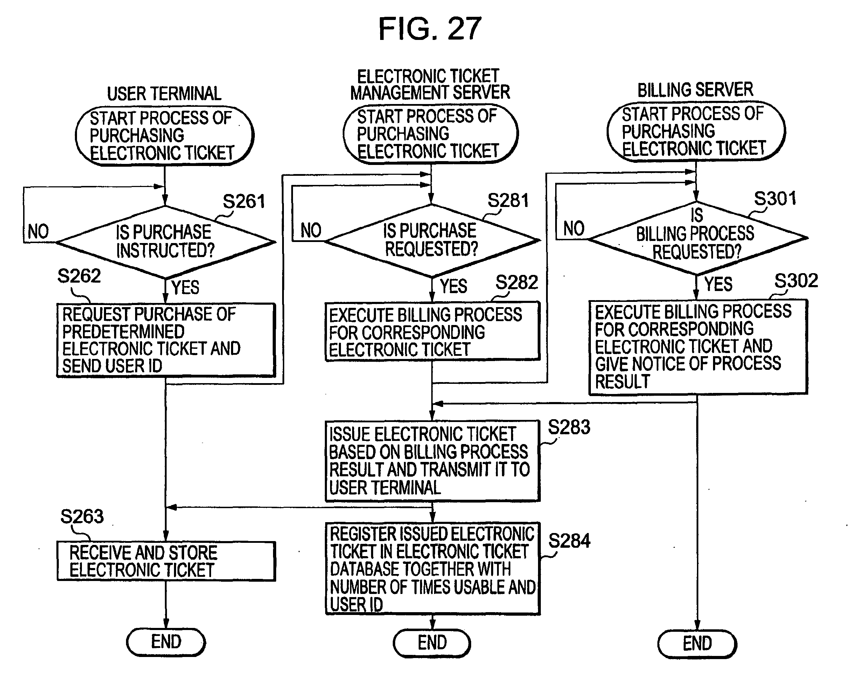

Next, a process performed in purchasing an electronic ticket by also registering a user ID will be described with reference to the flowchart of FIG. 27.

Since the processes of steps S261 and S263, steps S281 to S283, and steps S301 and S302 are similar to the processes of steps S141 and S143, steps S151 to S153, and steps S171 and S172 of FIG. 19, descriptions of these processes will be omitted.

In step S262, the electronic ticket management program 78a' makes a request to the electronic ticket management server 11 to purchase an electronic ticket, while also sending a user ID identifying a user.

In step S284, the electronic ticket management program 38b" of the electronic ticket management server 12 registers, in addition to the ticket ID and the access information ID of the issued electronic ticket, remaining count information and, further, the user ID transmitted from the user terminal 12 in the electronic ticket database 38a". Through such a process, the electronic ticket database 38a' as shown in FIG. 24 is generated, with the remaining count recorded as "1" and, further, the user ID as "111" for the electronic ticket S in the present case.

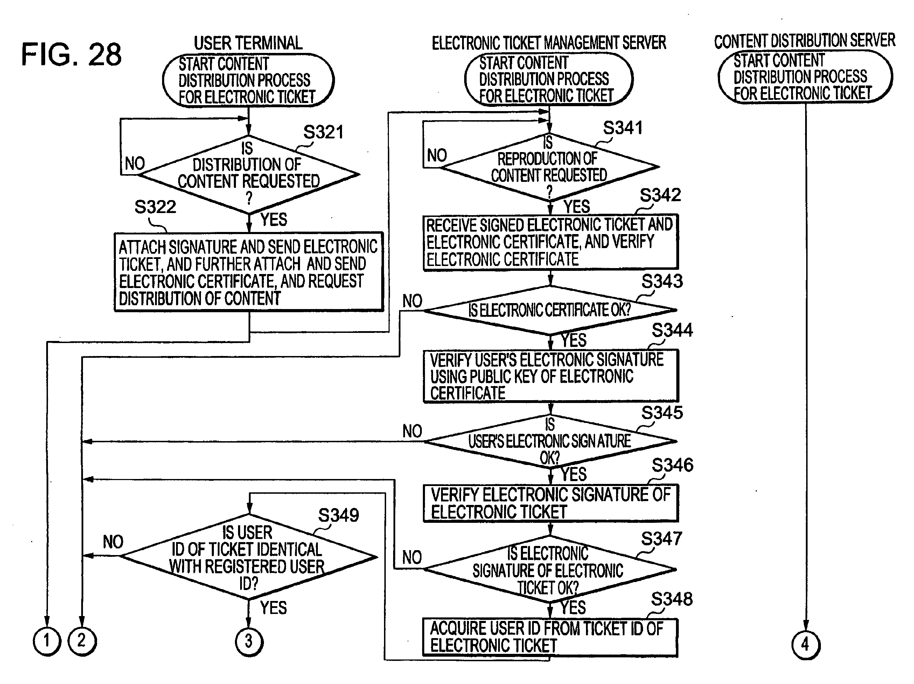

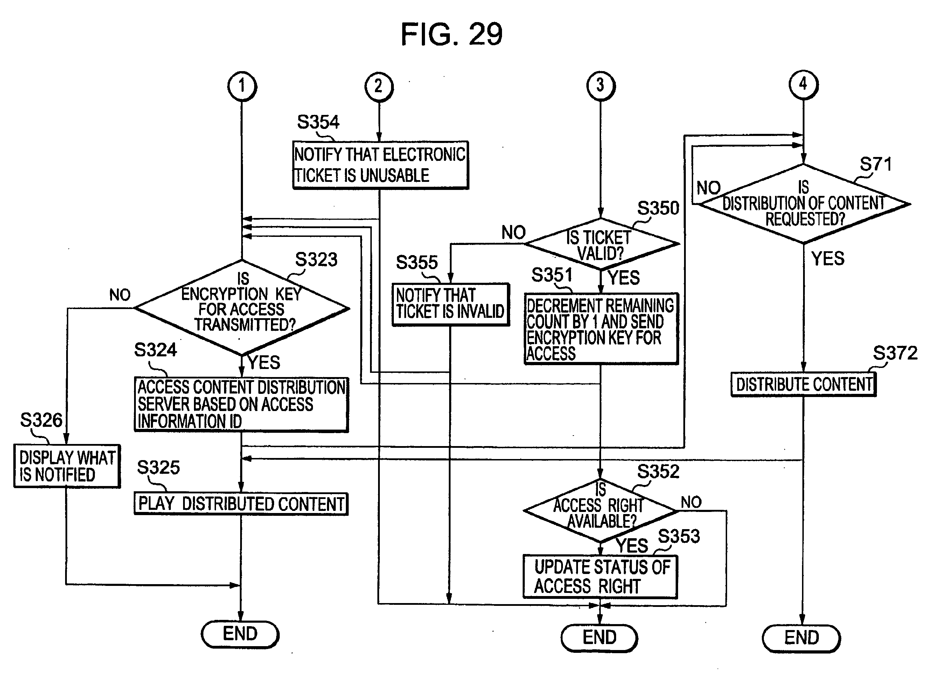

Next, with reference to the flowcharts of FIG. 28 and FIG. 29, a content distribution process in a content distribution system where, when an electronic ticket is registered in the electronic ticket management server 11 (when an electronic ticket is purchased by the user terminal 12), a user ID identifying an individual user is also registered, and it is made possible to identify an individual user of an electronic ticket will be described.

Since the processes of steps S321 and S323 to S326, the processes of steps S341, S350 to S353 and S355, and the processes of steps S371 and S372 in the flowcharts of FIG. 28 and FIG. 29 are similar to the processes of steps S191 and S193 to S196, steps S211, S214 to S217 and S219, and steps S241 to S242 described with reference to the flowchart of FIG. 20, descriptions of these processes will be omitted.

In step S322, the electronic ticket management program 78a' of the user terminal 12 attaches to an electronic ticket an electronic signature thereof and the electronic certificate 313, and sends it to the electronic ticket management server 11 so as to request distribution of content. More specifically, in the present case, the electronic ticket management program 78a' outputs the electronic ticket S to the signature management program 78b' to generate an electronic signature using the secret key K1, and attaches it to the electronic ticket S. Further, the electronic ticket management program 78a' causes the signature management program 78b' to attach the electronic certificate to the electronic signature-attached electronic ticket S, and transmits information comprised of the electronic ticket S, the electronic signature, and the electronic certificate to the electronic ticket management server 11 while also requesting distribution of content.

In step S342, the electronic ticket management program 38b" of the electronic ticket management server 11 receives the signed electronic ticket and the electronic certificate 313, and first causes the signature management program 38c' to check the electronic signature of the electronic certificate 313. That is, the electronic certificate 313 is generated by the certificate authority server 13 in advance, and thus a public key for checking an electronic ticket corresponding to this electronic certificate is made public from the certificate authority server 13. Thus, the electronic ticket management server 11 causes the signature management program 38c' to acquire from the certificate authority server 13 the public key for checking the electronic certificate that is made public, and verify the electronic certificate using this public key for checking the electronic certificate. Then, as a result of the verification of the electronic certificate, whether or not a user ID 313a and the public key K1' are legitimate ones that correspond to the electronic signature therefor can be checked.

In step S343, the signature management program 38c' determines whether the user ID 313a and the public key K1' contained in the electronic certificate correspond to the electronic signature therefor. When they do correspond, the program 38c' deems the user ID and the public key legitimate, and the process proceeds to step S344.

In step S344, the signature management program 38c' checks the electronic signature (FIG. 26) attached to the electronic ticket using the public key contained in the electronic certificate. That is, in the present case, the electronic ticket S has been sent, and the electronic signature attached to the electronic ticket S is granted to the electronic ticket S with the secret key K1 of the signature management program 78b' of the user terminal 12. Thus, the signature management program 38c' checks if the electronic ticket S and the electronic signature attached thereto correspond to each other using the public key K1' contained in the electronic certificate.

In step S345, the signature management program 38c' determines whether or not the user's electronic signature is legitimate. That is, when it is confirmed that the transmitted electronic ticket S corresponds to the electronic signature attached thereto, the signature management program 38c' judges that the electronic signature is certainly by the user of the user ID contained in the electronic certificate, and the process proceeds to step S346.

In step S346, the signature management program 38b" checks the electronic signature (FIG. 8) of the electronic ticket. That is, the electronic ticket management program 38b" checks the electronic signature generated by an issuer at the time the electronic ticket was issued. That is, in the present case, since it is the electronic ticket management server 11 itself that issued the electronic ticket S, the public key K0' corresponding to the secret key K0 used in issuing the electronic ticket is read (if it was issued by another server, a public key made public by that other server is read), and it is verified with that public key K0' if the electronic signature of the electronic ticket is for the ticket ID and the access information ID.

In step S347, if it is confirmed that this electronic signature is for the ticket ID and the access information ID of the electronic ticket S, the signature management program 38b" deems that electronic ticket legitimate, and the process proceeds to step S348.

In step S348, the electronic ticket management program 38b" reads the ticket ID contained in the electronic ticket, and matches it against the electronic ticket database 38a" to read the corresponding user ID.

In step S349, the electronic ticket management program 38b" determines whether or not the user ID contained in the electronic ticket matches the user ID registered in the electronic ticket database 38a" based on the ticket ID, and, for example, when they do match, the electronic ticket management program 38b" deems the owner of the user terminal 12 requesting distribution of content a legitimate user registered in the electronic ticket database 38a". The process proceeds to the process of step S350 (FIG. 29), and subsequent steps are repeated.

In any of the cases where the user ID contained in the electronic certificate is not legitimate in step S343, the user's electronic signature is not legitimate in step S345, the electronic signature attached to the electronic ticket is not legitimate in step S347, and the user ID contained in the electronic ticket is not, in step S349, the user ID registered in the electronic ticket database 38a", the process proceeds to step S354, and it is notified that the electronic ticket cannot be used.

Through such a process, using an electronic signature-attached electronic ticket that is hard to tamper with, it is possible to permit only the user terminal 12 having the electronic ticket to access the content distribution server 14, and safe distribution of electronic content can be made possible. Further, by performing a process that takes the number of times an electronic ticket is usable into account, a content distribution process in line with the price for the electronic ticket can be performed. Still further, since content can be distributed after confirming that a user requesting distribution of content is a legitimate user from the electronic certificate, the electronic signature and the user ID, unauthorized distribution of content due to so-called spoofing can be prevented.

Through such a configuration, since a user is identified and only a legitimate user can receive the distribution of content, the right of an electronic ticket, for example, can be assigned by changing user registration.

As such, a content distribution system in which the right of an electronic ticket can be assigned to another user will be described.

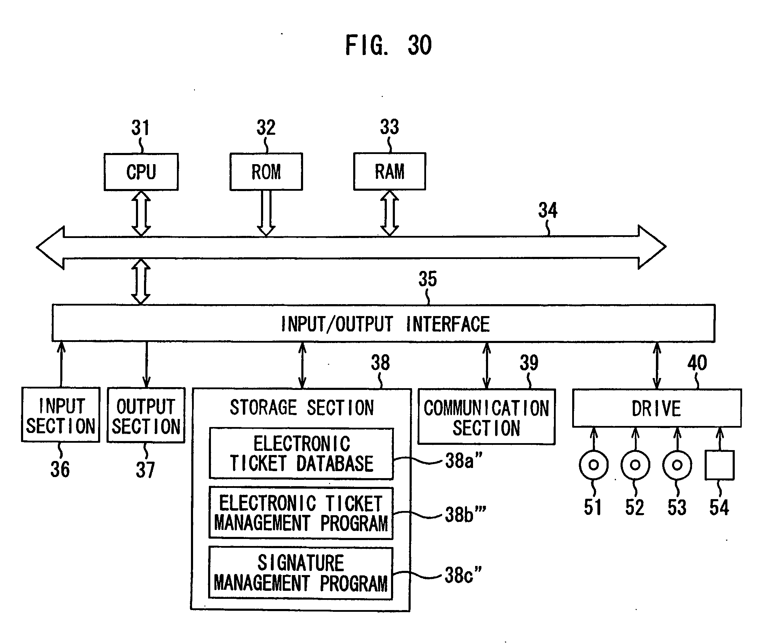

FIG. 30 shows the configuration of an electronic ticket management server 11 in a content distribution system in which the right of an electronic ticket can be assigned to another user as mentioned above. Note that in FIG. 30, parts corresponding to those of the electronic ticket management server 11 of FIG. 2, FIG. 16, or FIG. 21 are given the same reference symbols, and that descriptions thereof will hereinafter be omitted where appropriate.

The electronic ticket management server 11 of FIG. 30 is similar to the electronic ticket management server 11 of FIG. 21 in its basic configuration, but differs in that an electronic ticket management program 38b''' and a signature management program 38c" are stored in place of the electronic ticket management program 38b" and the signature management program 38c' stored in the storage section 38.

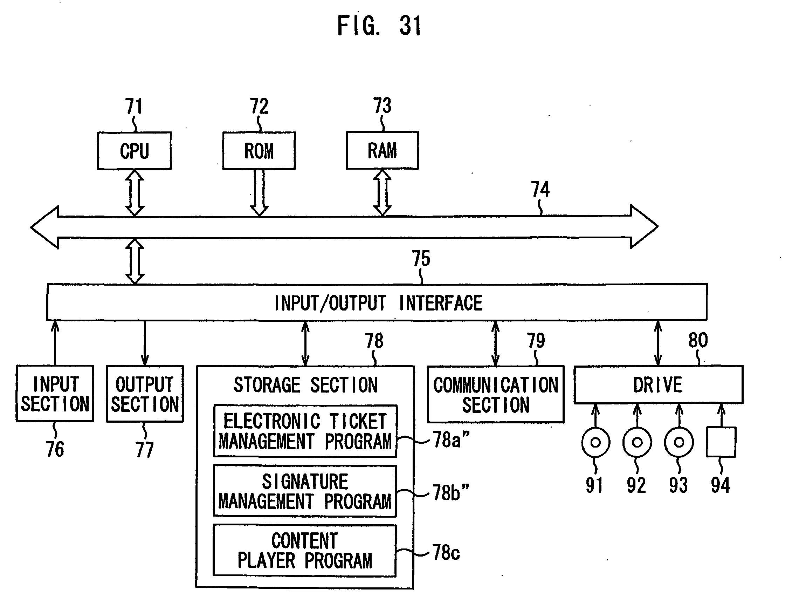

FIG. 31 shows the configuration of a user terminal 12 in the content distribution system in which the right of an electronic ticket can be assigned to another user as mentioned above. Note that in FIG. 31, parts corresponding to those of the user terminal 12 of FIG. 3 or FIG. 22 are given the same reference symbols, and that descriptions thereof will hereinafter be omitted where appropriate.

The user terminal 12 of FIG. 31 is similar to the user terminal 12 of FIG. 22 in its basic configuration, but differs in that an electronic ticket management program 78a" and a signature management program 78b" are stored in place of the electronic ticket management program 78a' and the signature management program 78b' stored in the storage section 78.

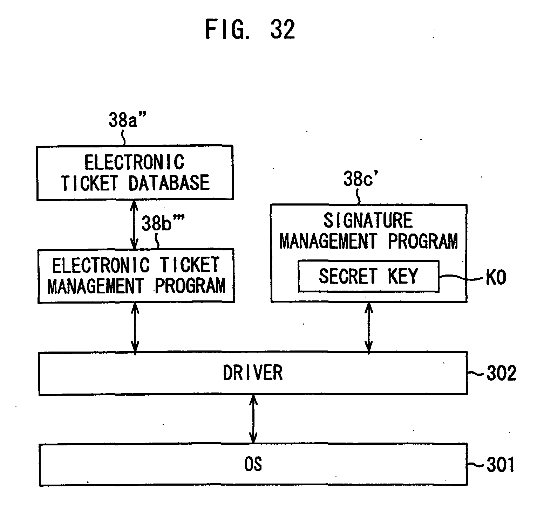

Next, functions of the electronic ticket management server 11 of FIG. 30 will be described with reference to the functional block diagram of FIG. 32.

The electronic ticket management program 38b"' is basically similar to the electronic ticket management program 38b", but further updates the contents of the electronic ticket database 38a" based on electronic ticket transfer destination and transfer source information inputted by a user of the electronic ticket transfer source.

The signature management program 38c" decrypts an electronic ticket, and an electronic signature and an electronic certificate appended thereto from a user terminal 12 that is to be a transfer destination using the respective public keys, and checks that each is an authentic electronic signature or electronic certificate.

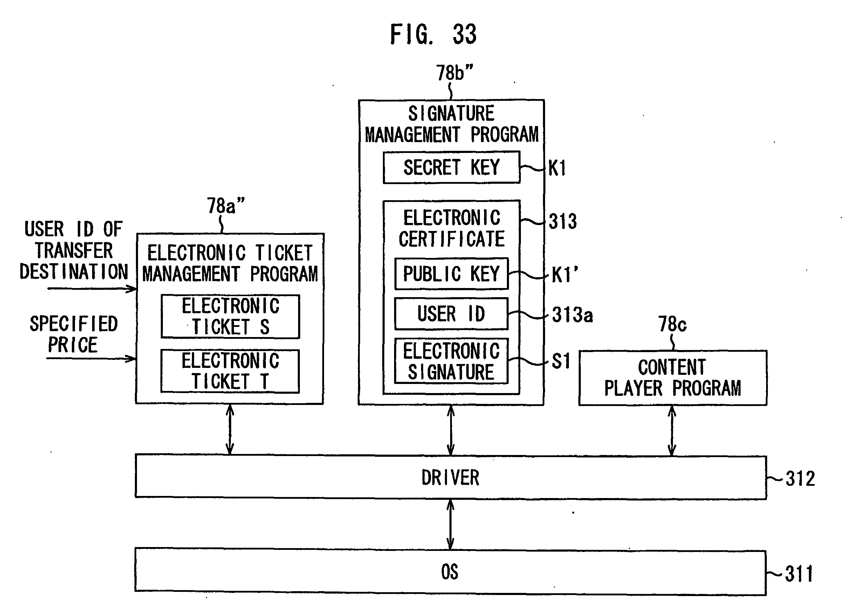

Next, functions of the user terminal 12 of FIG. 31 will be described with reference to the functional block diagram of FIG. 33.

The electronic ticket management program 78a" is basically similar to the electronic ticket management program 78 of FIG. 22, but further performs a process of assigning the electronic ticket (transferring the right of an electronic ticket) to another user.

That is, when used by a user that is to become a transfer source of the electronic ticket, the electronic ticket management program 78a" outputs to the signature management program 78b" the user ID of the transfer destination of the electronic ticket and a price of the electronic ticket to be transferred according to information inputted through an operation of the input section 76 by the user, and prepares information that has the electronic signature, after which it further attaches an electronic certificate, and sends it to a user terminal 12 that is to be the transfer destination of the electronic ticket.

Further, when operated by a user that is to be the transfer destination of the electronic ticket, the electronic ticket management program 78a" receives the electronic signature-attached electronic ticket with the electronic certificate attached thereto from the user terminal 12 that is to be the transfer source, and also outputs the price of the electronic ticket to the signature management program 78b" according to information inputted in accordance with an operation of the input section 76 by the transfer destination user, and adds the electronic signature of the transfer destination user terminal 12 onto the received electronic ticket information, after which it further attaches an electronic certificate thereto, and sends it to the electronic ticket management server 11.

The signature management program 78b" is basically similar to the signature management program 78b' of FIG. 22, but in the user terminal 12 that is to be the transfer source of the electronic ticket, it further adds an electronic signature to the transfer destination user ID and information on the electronic ticket price specified by the transfer source user, while also attaching an electronic certificate. Further, in the user terminal 12 that is to be the transfer destination of the electronic ticket, the signature management program 78b" adds price information specified by the transfer destination user to the electronic signature-attached information sent from the transfer source user terminal 12, and adds an electronic signature while attaching an electronic certificate.

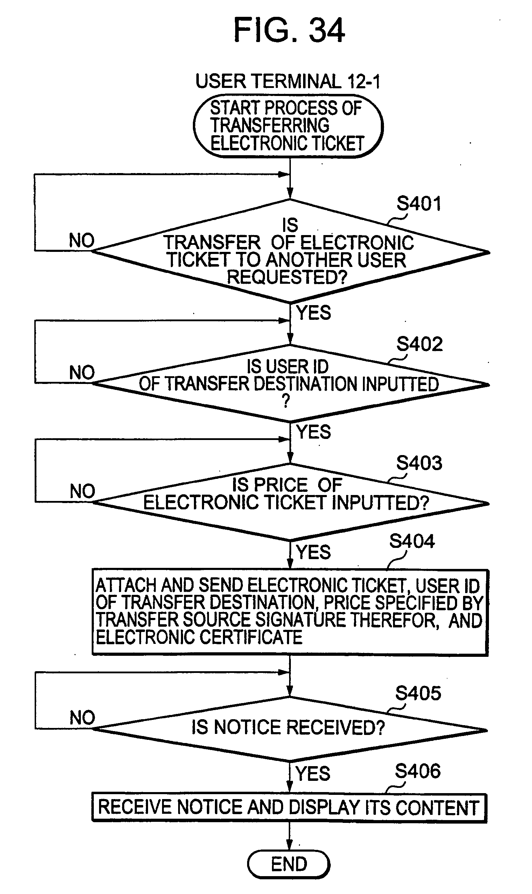

Next, a transfer process for an electronic ticket by a user terminal 12-1, which is to be a transfer source of the electronic ticket, will be described with reference to the flowchart of FIG. 34. Note that the terms "transfer source user terminal 12-1" and "transfer destination user terminal 12-2" will be used in the following description. Further, with respect to the secret key K1, the public key K1', the electronic certificate 313, the user ID 313a, the electronic ticket management program 78a", and the signature management program 78b", "-1" is added to those of the transfer source user terminal 12-1, and "-2" is added to those of the transfer destination user terminal 12-2.

In step S401, an electronic ticket management program 78a"-1 determines whether or not transfer of an electronic ticket to another user is requested, and repeats the step until transfer of an electronic ticket to another user is requested. When transfer of, for example, the electronic ticket S is requested in step S401, the process proceeds to step S402.

In step S402, the electronic ticket management program 78a''-1 determines whether or not a user ID 313-2, which is to be a transfer destination, is inputted, and repeats the process until it is inputted. When the user ID that is to be the transfer destination is inputted, the process proceeds to step S403.

In step S403, the electronic ticket management program 78a"-1 determines whether or not a price of the electronic ticket specified by the transfer source user is inputted, and repeats the process until a price specified by the transfer source user is inputted. For example, in step S403, when the electronic ticket price specified by the transfer source user is inputted, the process proceeds to step S404.

In step S404, the electronic ticket management program 78a"-1 controls a signature management program 78b"-1, generates an electronic signature for information on the electronic ticket, the transfer destination user, and the price specified by the transfer source with a secret key K1-1 and attaches it, further attaches an electronic certificate 313 of the transfer source, and sends it as a transfer notice to a user terminal 12-2 owned by the transfer destination user.

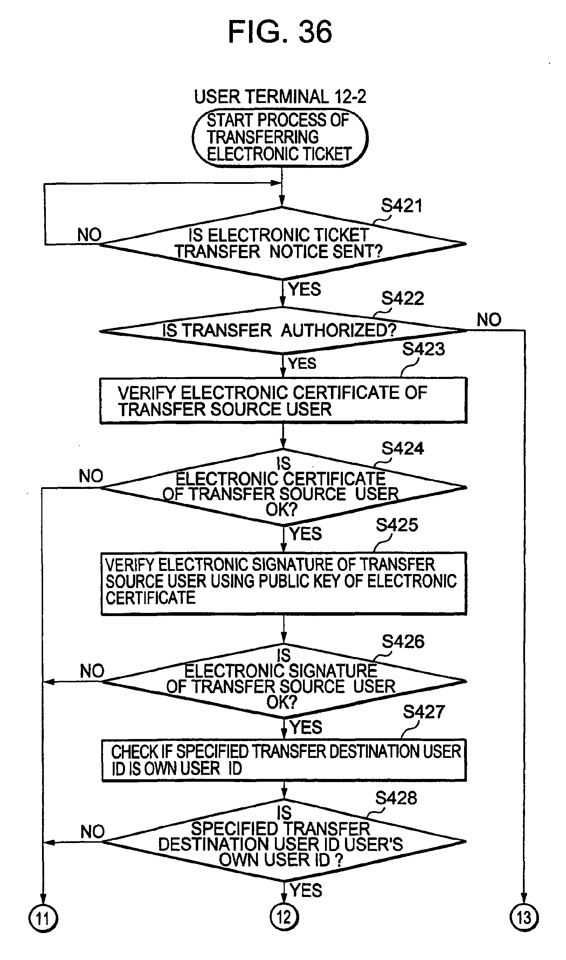

Now, a transfer process for the electronic ticket by the user terminal 12-2 owned by the user to whom the electronic ticket is transferred will be described with reference to the flowchart of FIG. 36.

In step S421, an electronic ticket management program 78a''-2 determines whether or not an electronic ticket transfer notice is sent, and repeats the step until a transfer notice is sent. If the transfer notice is sent through the process of step S404 in the flowchart of FIG. 34, the process proceeds to step S422.

In step S422, the electronic ticket management program 78a'-2' determines whether or not the transfer of the electronic ticket is authorized, that is, the user decides whether or not to accept assignment of the electronic ticket from another user. If, for example, the user of the user terminal 12-2 accepts assignment of the electronic ticket from the user of the user terminal 12-1, that is, if the transfer is authorized, the process proceeds to step S423.

In step S423, the electronic ticket management program 78a"-2 receives the transfer notice, controls a signature management program 78b"-2, and verifies the electronic certificate of the transfer source user. That is, the signature management program 78b"-2 is controlled by the electronic ticket management program 78a''-2, and, with respect to the electronic certificate 313-1 of the transfer source user contained in the transfer notice, a public key, which is issued and made public by the certificate authority server 13, for checking the electronic certificate 313-1is acquired and used, and it is checked if a public key K1'-1 of the transfer source user and a user ID 313a-1 of the transfer source user contained in the electronic certificate 313-1 correspond to an electronic signature therefor.

In step S424, the signature management program 78b"-2 determines whether or not the public key K1'-1 of the transfer source user and the user ID 313a-1 of the transfer source user contained in the electronic certificate 313-1 are legitimate. If it is determined in step S424 that the public key K1'-1 of the transfer source user and the user ID 313a-1 of the transfer source user contained in the electronic certificate 313-1 are valid, it is determined that the electronic certificate of the transfer source is valid, and the process proceeds to step S425.

In step S425, the signature management program 78b"-2 checks, using the public key K1'-1 of the transfer source user terminal 12-1 contained in the electronic certificate, if the electronic signature by the transfer source corresponds to information on the electronic ticket, the transfer destination user ID, and the price specified by the transfer source which are objects of the electronic signature.

In step S426, the signature management program 78b"-2 determines if the electronic signature of the transfer source user contained in the transfer notice is authentic, that is, whether or not the information on the electronic ticket, the transfer destination user ID, and the price specified by the transfer source contained in the transfer notice corresponds to the electronic signature of the transfer source user, and if it is determined that they do correspond, it is determined that the transfer notice is certainly sent from the user having the user ID 313a-1, and the process proceeds to step S427.

In step S427, the signature management program 78b"-2 checks a transfer destination user ID 313a-2 by comparing it with its own user ID 313a-2. In step S428, the signature management program 78b"-2 determines whether or not the transfer destination user ID 313a-2 matches its own user ID 313a-2, and if, for example, it is determined that they do match, it deems the transfer destination to be itself, and the process proceeds to step S429.

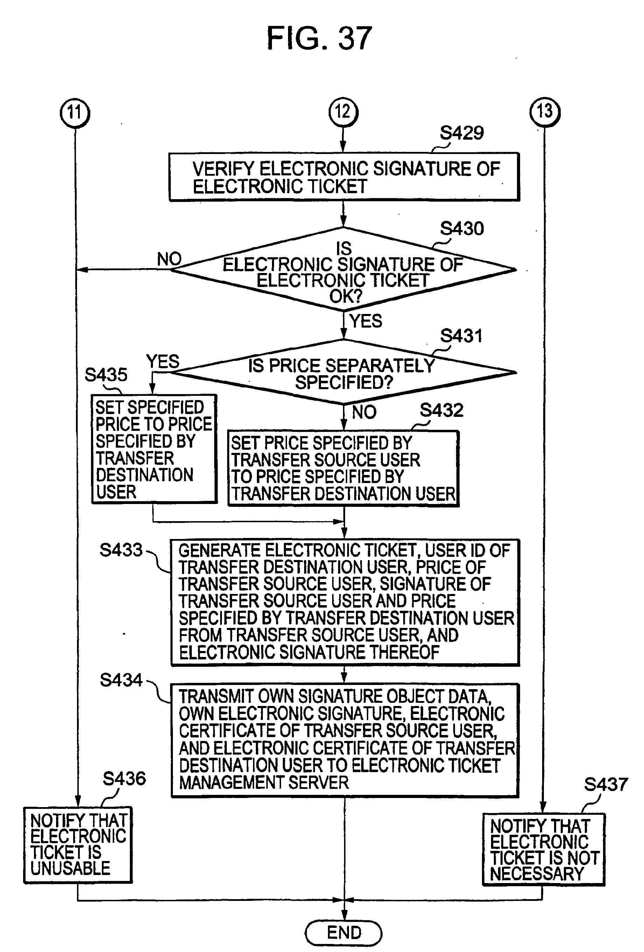

In step S429 (FIG. 37), the signature management program 78b"-2 checks the electronic signature, which is contained in the electronic ticket, of the server that issued the electronic ticket. That is, the signature management program 78b"-2 acquires the public key made public by the electronic ticket management server 11 that issued the electronic ticket S, and verifies if the electronic signature corresponds to the electronic ticket information that is the object of the electronic signature.

In step S430, the signature management program 78b"-2 determines whether or not the electronic ticket is authentic. That is, the signature management program 78b"-2 determines whether or not the electronic signature corresponds to the electronic ticket information, and if, for example it is determined that they do correspond, the process proceeds to step S431.

In step S431, the electronic ticket management program 78a"-2 determines whether or not the price of the electronic ticket is separately specified by the transfer destination user, and if, for example, the price is not specified separately by the transfer destination user, the process proceeds to step S432.

In step S432, the electronic ticket management program 78a"-2 sets the price specified by the transfer source user to the price specified by the transfer destination user.

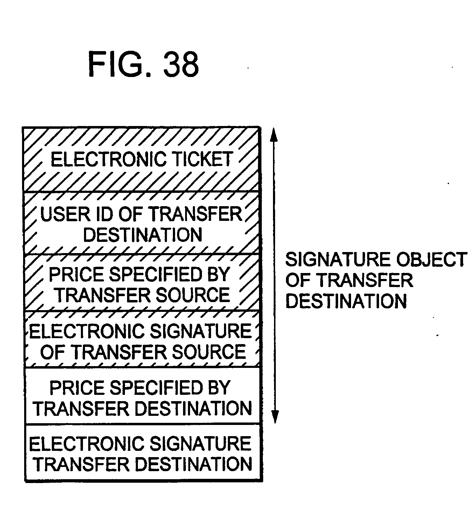

In step S433, the electronic ticket management program 78a"-2 controls the signature management program 78b"-2 to generate, with a secret key K1-2, an electronic signature of the transfer destination user for information from the transfer source user on the electronic ticket, the user ID of the transfer destination user, the price specified by the transfer source user, the electronic signature of the transfer source user, and the price specified by the transfer destination user, as shown in FIG. 38.

In step S434, the electronic ticket management program 78a''-2 transmits, as the electronic ticket transfer notice and to the electronic ticket management server 11, the information from the transfer source user on the electronic ticket, the user ID of the transfer destination user, the price specified by the transfer source user, the electronic signature of the transfer source user, and the price specified by the transfer destination user, and an electronic signature therefor of the transfer destination user.

If the specified price of the electronic ticket is separately inputted by the transfer destination user in step S431, then in step S435, the electronic ticket management program 78a"-2 sets the separately inputted specified price as the price specified by the transfer destination user.

If it is determined in step S424 that the electronic certificate of the transfer source user is not authentic, if it is determined in step S426 that the electronic signature of the transfer source user is not authentic, if it is determined in step S428 that the user ID of the specified transfer destination user is not its own user ID, or if it is determined in step S430 that the electronic signature of the electronic ticket is not authentic, then in step S436, the electronic ticket management program 78a"-2 notifies the transfer destination user that the electronic ticket is unusable, that is, that the information in the transfer notice is not authentic.

If the transfer is not authorized in step S422, then in step S437, the electronic ticket management program 78a"-2 notifies the user terminal 12-1 owned by the transfer source user that the electronic ticket is not needed, that is, that the transfer of the electronic ticket is not authorized.

Here, the description returns to the flowchart of FIG. 34.

In step S405, the electronic ticket management program 78a"-1 of the user terminal 12-1 of the transfer source user determines whether or not a notice is received, and repeats the process until a notice is received. If, for example, a notice indicating that the electronic ticket is not needed is transmitted through the process of step S437 in FIG. 37 and is received, the process proceeds to step S406.

In step S406, the electronic ticket management program 78a"-1 displays the content of the notice received. That is, in the present case, the fact that the transfer destination user did not need the electronic ticket is displayed, and the fact that the transfer of the electronic ticket was not performed is notified to the transfer source user.

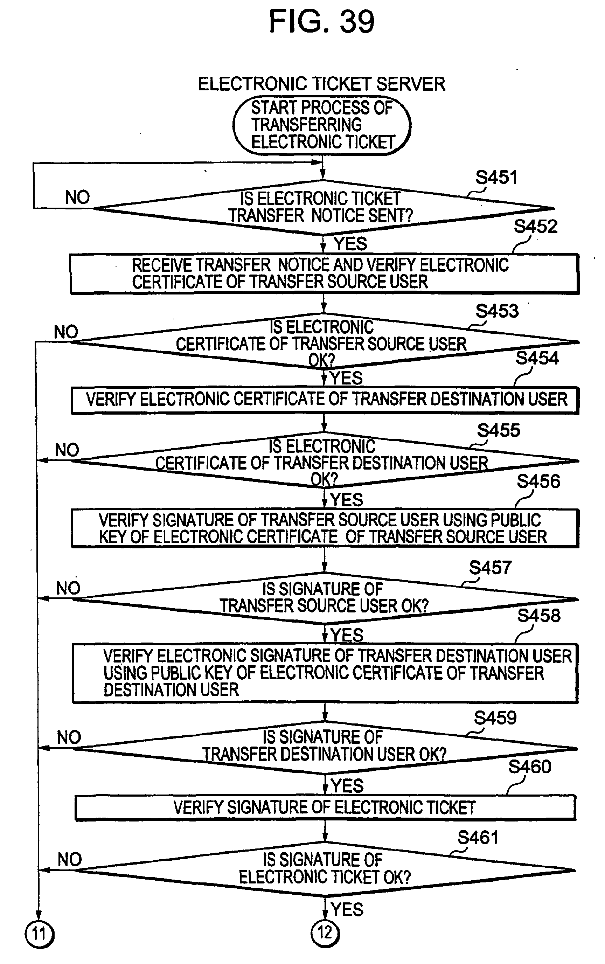

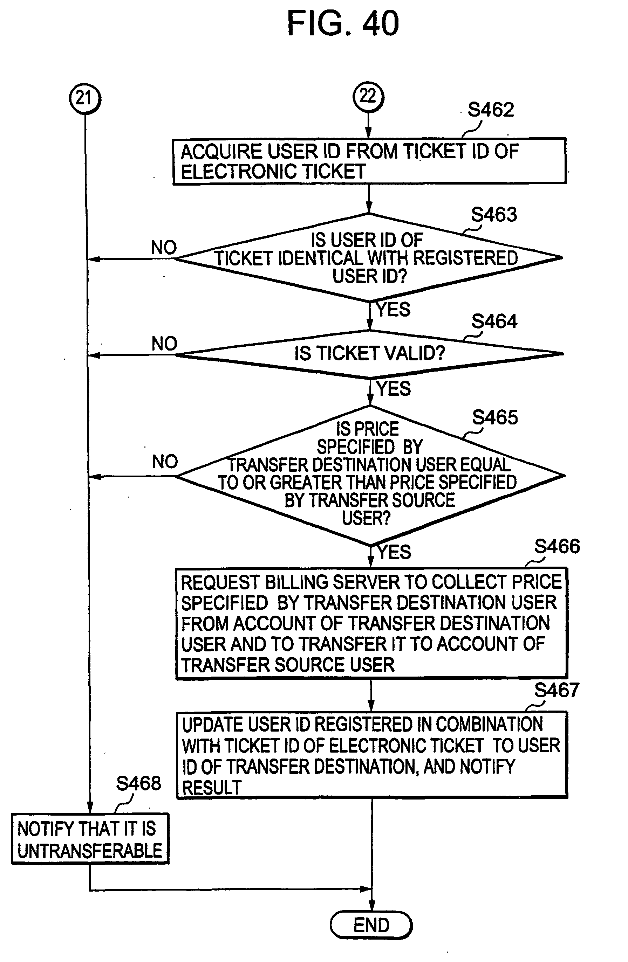

Next, with reference to the flowcharts of FIG. 39 and FIG. 40, a transfer process for the electronic ticket by the electronic ticket management server 11 will be described where, in the process of step 434 in the flowchart of FIG. 37, the transfer notice comprised of the information from the transfer source user on the electronic ticket, the user ID of the transfer destination user, the price specified by the transfer source user, the electronic signature of the transfer source user and the price specified by the transfer destination user, and the electronic signature therefore is transmitted to the electronic ticket management server 11 by the electronic ticket management program 78a"-2.

In step S451, the electronic ticket management program 38b''' determines whether or not the electronic ticket transfer notice is sent, and repeats the process until the electronic ticket transfer notice is sent. If, for example, the electronic ticket transfer notice is sent from the user terminal 12-2 of the transfer destination user of the electronic ticket through the process of step S434 of the flowchart of FIG. 37, the process proceeds to step S452.

In step S452, the electronic ticket management program 38b''' receives the transfer notice and verifies the electronic certificate of the transfer source user contained therein. That is, the electronic ticket management program 38b'" controls the signature management program 38c" to acquire a public key for checking an electronic certificate, which key is made public by the certificate authority server 13 corresponding to the electronic certificate of the transfer source user contained in the transfer notice, and, using it, checks if the information on the user ID of the transfer source user and the public key K1'-1 contained in the electronic certificate corresponds to the electronic signature therefor.

In step S453, the signature management program 38c" determines whether or not the electronic certificate of the transfer source user is authentic, and if the information on the user ID of the transfer source user and the public key K1'-1 contained in that electronic certificate corresponds to the electronic signature therefor, the electronic certificate is deemed authentic, and thus the process proceeds to step S454.

In step S454, the signature management program 38c" checks the electronic certificate of the transfer destination user in a manner similar to the manner in which the electronic certificate of the transfer source user is checked. In step S455, the signature management program 38c" determines whether or not the electronic certificate of the transfer destination user is authentic in a manner similar to that used for the electronic certificate of the transfer source user in step S453, and if it is determined to be authentic, the process proceeds to step S456.

In step S456, the signature management program 38c" verifies the electronic signature by the transfer source user with the public key K1'-1 contained in the electronic certificate of the transfer source user. That is, using the public key K1'-1 contained in the electronic certificate of the transfer source user, the signature management program 38c" checks if the electronic signature of the transfer source user corresponds to the electronic ticket, the transfer destination user ID and the price specified by the transfer source, which are signature object information.

In step S457, the signature management program 38c" determines whether or not the electronic signature by the transfer source user is authentic, that is, whether or not the electronic signature by the transfer source user corresponds to the electronic ticket, the transfer destination user ID, the price specified by the transfer source which are signature object information. If, for example, the electronic signature by the transfer source user and the signature object information correspond in step S457, the signature management program 38c" deems the electronic signature by the transfer source user authentic, and the process proceeds to step S458.

In step S458, the signature management program 38c" verifies, in a manner similar to the process in step S456, the electronic signature by the transfer destination user with a public key K1'-2 contained in the electronic certificate of the transfer destination user.

In step S459, the signature management program 38c" determines whether or not the electronic signature by the transfer destination user is authentic in a manner similar to the process in step S457, and if, for example, it is determined to be authentic, the process proceeds to step S460.

In step S460, the signature management program 38c" checks the electronic signature of the electronic ticket. That is, the signature management program 38c" checks, using a public key made public by the server that issued the electronic ticket, if the electronic signature of the electronic ticket corresponds to the ticket ID and the access information ID which are signature object information. In the present case, since the electronic ticket S is issued by the electronic ticket management server 11 itself, the electronic signature of the electronic ticket is verified with its own public key K0'.

In step S461, the signature management program 38c" checks if the electronic signature of the electronic ticket is authentic. That is, the electronic ticket management program 38c" determines whether or not the electronic signature corresponds to the ticket ID and the access information ID which are signature object information. If, for example, it is determined that the electronic signature corresponds to the ticket ID and the access information ID which are signature object information, that is, if it is determined that the signature of the electronic ticket is authentic, the process proceeds to step S462.

In step S462, the electronic ticket management program 38b"' references the electronic ticket database 38a" based on the ticket ID of the electronic ticket, and acquires the user ID of the registered electronic ticket S.

In step S463, the electronic ticket management program 38b"' determines whether or not the user ID of the transfer source user of the electronic ticket matches the user ID registered in the electronic ticket database 38a", and if, for example, it is determined that they are identical, then the process proceeds to step S464.

In step S464, the electronic ticket management program 38b'" determines from the ticket ID whether or not the electronic ticket is currently valid. That is, the electronic ticket management program 38b'" checks, for example, the remaining count from the information registered in the electronic ticket database 38a" to determine whether or not the electronic ticket is valid, and if, for example, it is determined that the electronic ticket is valid, the process proceeds to step S465.

In step S465, the electronic ticket management program 38b'" determines whether or not the price specified by the transfer destination user is equal to or greater than the price specified by the transfer source user, and if, for example, it is determined that the price specified by the transfer destination user is equal to or greater than the price specified by the transfer source user, then, it is determined that the transfer source user and the transfer destination user have come to an agreement on the price, and the process proceeds to step S466.

In step S466, the electronic ticket management program 38b'" requests the billing server 15 to collect the price specified by the transfer destination user from an account of the transfer destination user and to transfer it to an account of the transfer source user.

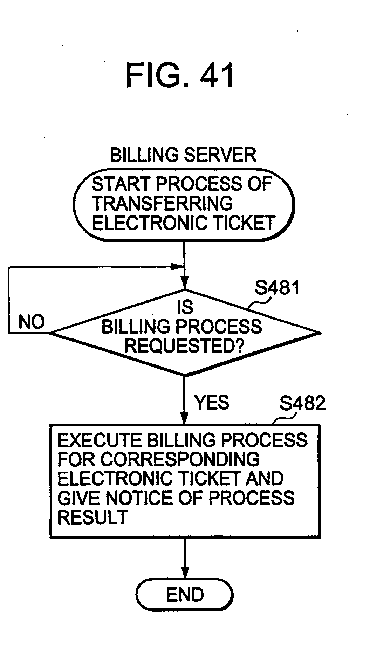

Now, a process by the billing server 15 will be described with reference to the flowchart of FIG. 41. Note that since the processes of steps S481 and S482 of FIG. 41 are similar to the processes of steps S41, S42 of FIG. 14, descriptions of these processes will be omitted.

Here, the description returns to the flowchart of FIG. 40.

In step S467, the electronic ticket management program 38b"' accesses the electronic ticket database, changes the user ID registered in combination with the ticket ID of the electronic ticket from the transfer source user ID to the transfer destination user ID, and further notifies the result to the transfer source user terminal 12-1.

If it is determined in step S453 that the electronic certificate of the transfer source user is not authentic, if it is determined in step S455 that the electronic certificate of the transfer destination user is not authentic, if it is determined in step S457 that the electronic signature of the transfer source user is not authentic, if it is determined in step S459 that the electronic signature of the transfer destination user is not authentic, if it is determined in step S461 that the electronic signature of the electronic ticket is not authentic, if in step S463 the ticket ID contained in the electronic ticket does not match the ticket ID of the electronic ticket registered in the electronic ticket database 38a", if in step S464 the ticket is not valid, or if in step S465 the price specified by the transfer destination user is not equal to nor greater than the price specified by the transfer source user, then in step S468, the electronic ticket management program 38b''' notifies the user terminal 12-1 of the transfer source user that the transfer of the electronic ticket is impossible.

Note that in the examples above descriptions have been given on the assumption that the owner of an electronic ticket (a user whose user ID of the electronic ticket database is registered) is a specific user, but the owner of an electronic ticket is not limited to being a specific user, but may also be, for example, a group, or a plurality of users, or may further be free of limitations, for example. Therefore, in the transfer of an electronic ticket between owners, too, it is possible to transfer from a specific user to a plurality of groups, or free of restrictions.

Further, if a set of an electronic signature-attached electronic ticket and an electronic certificate of a user is eavesdropped by a third party, it is conceivable that unauthorized use by so-called spoofing could become possible. In this case, if the user terminal 12, too, has a counter for counting the number of times usable (remaining count), and changes the counter every time an electronic ticket is used so as to include a counter value in the set of the electronic signature-attached electronic ticket and the electronic certificate, the electronic ticket management server 11 can prevent unauthorized use by comparing the changing counter value with the remaining count.

Further, although in the examples above, data is transmitted/received always with an electronic certificate attached, if, for example, it is stored in the electronic ticket management server 11 or the like so as to correspond to a user ID, then there would no longer be a need to attach an electronic certificate every time the data is exchanged.

Furthermore, as an application example of the example of transferring the owner of an electronic ticket, a predetermined period may be set and the proprietary right of the electronic ticket may be transferred to a user who sets the highest specified price within that period. By adopting such a configuration, a net auction system for electronic tickets may be established.

Through such a process, it is made possible to change the owner of an electronic ticket. Thus, for example, even when the right to have content distributed is purchased as described above by a user terminal, limitations on equipment for receiving distribution of content can be eliminated, and, further, assignment of the right to another user can also be performed easily.

The above-mentioned series of processes can be performed by hardware, but can also be performed by software. To perform the series of processes by software, programs constituting the software are installed from a recording medium to a computer incorporated into dedicated hardware, or to a general-purpose personal computer or the like capable of performing various functions by having various programs installed.

This recording medium is comprised not only of the storage sections 38, 78, 118, 158 and 198 which are provided to users in a state where they are incorporated in advance into the electronic ticket management server 11, the user terminals 12, the certificate authority server 13, the content distribution servers 14, and the billing server 15 as shown in FIG. 2 to FIG. 6 and in which programs are recorded, but also of packaged media including the magnetic disks 51, 91, 131, 171, 211 (including flexible disks), optical disks 52, 92, 132, 172, 212 (including CD-ROMs (Compact Disk-Read Only Memory) and DVDs (Digital Versatile Disk), magneto-optical disks 53, 93, 133, 173, 213 (including MDs (Mini-Disc) (registered trademark)), semiconductor memories 54, 94, 134, 174, 214 (including Memory Sticks) or the like which are distributed to users to provide programs separately from a computer and on which programs are recorded.

Note that in the present specification, examples in which content is distributed from the content distribution servers 14 have been described, cases in which content is supplied to the user terminals 12 by the magnetic disks 51, 91, 131, 171, 211 (including flexible disks), the optical disks 52, 92, 132, 172, 212 (including CD-ROMs (Compact Disk-Read Only Memory) and DVDs (Digital Versatile Disk), the magneto-optical disks 53, 93, 133, 173, 213 (including MDs (Mini-Disc) (registered trademark)), the semiconductor memories 54, 94, 134, 174, 214 (including Memory Sticks) or the like are also conceivable. In such cases, information with which files of the content stored in the recording media above can be specified will be included in the access information ID of an electronic ticket.

Note that in the present specification steps describing the programs to be recorded on a recording medium include not only processes performed chronologically in line with the order described, but also processes performed in parallel or individually and not necessarily performed in a chronological manner.

Further, in the present specification, a system represents the whole apparatus comprised of a plurality of apparatuses.

### INDUSTRIAL APPLICABILITY

According to the present invention, when the right to acquire information circulated via a network is owned, it becomes possible to acquire information without being restricted by device, and further, it becomes possible to freely assign the right to acquire information circulated via the network.

## Claims

1. An information processing apparatus for acquiring predetermined information, the information processing apparatus **characterized in that** it comprises:
storage means for storing an electronic ticket indicating the right to acquire said predetermined information;
transmission means for transmitting a ticket ID for identifying said electronic ticket and an electronic signature for said ticket ID to another information processing apparatus;
reception means for receiving an encryption key for acquiring said predetermined information transmitted from said other information processing apparatus based on said ticket ID and said electronic signature; and
acquisition means for acquiring said predetermined information using the encryption key received by said reception means.

2. The information processing apparatus according to claim 1, **characterized in that** said electronic ticket includes, in addition to said ticket ID, an access information ID for identifying said predetermined information which is acquirable and an electronic signature for said ticket ID or said access information ID.

3. The information processing apparatus according to claim 2, **characterized in that** said access information ID includes a URL of said predetermined information on the Internet.

4. The information processing apparatus according to claim 1, **characterized in that**:
said storage means stores, in addition to said electronic ticket, an electronic signature for information included in said electronic ticket, and a user certificate including a public key for verifying the electronic signature for the information included in said electronic ticket, a user ID for identifying an owner of said electronic ticket, and an electronic signature for said public key and said user ID;
said transmission means transmits said electronic signature and said user certificate in addition to said electronic ticket.

5. The information processing apparatus according to claim 1, **characterized by** further comprising request means for requesting said other information processing apparatus that the user ID for identifying the owner of said electronic ticket be changed to a user ID of another owner different from said owner.

6. The information processing apparatus according to claim 5, **characterized by** further comprising price setting means for setting a price accompanying the change when said request means requests said other information processing apparatus that the user ID for identifying the owner of said electronic ticket be changed to the user ID of the other owner different from said owner.

7. The information processing apparatus according to claim 6, **characterized in that** said price setting means takes a price set by said owner to be the price accompanying the change.

8. The information processing apparatus according to claim 6, **characterized in that** said price setting means takes a price set by said other owner to be the price accompanying the change.

9. The information processing apparatus according to claim 1, **characterized in that** said predetermined information includes a movie or music.

10. An information processing method of an information processing apparatus for acquiring predetermined information, the information processing method **characterized in that** it includes:
a storage step for storing an electronic ticket indicating the right to acquire said predetermined information;
a transmission step for transmitting a ticket ID for identifying said electronic ticket and an electronic signature for said ticket ID to another information processing apparatus;
a reception step for receiving an encryption key for acquiring said predetermined information transmitted from said other information processing apparatus based on said ticket ID and said electronic signature; and
an acquisition step for acquiring said predetermined information using the encryption key received in the process of said reception step.

11. A recording medium on which a computer readable program for controlling an information processing apparatus for acquiring predetermined information is recorded, the program **characterized in that** it includes:
a storage control step for controlling storage of an electronic ticket indicating the right to acquire said predetermined information;
a transmission control step for controlling transmission of a ticket ID for identifying said electronic ticket and an electronic signature for said ticket ID to another information processing apparatus;
a reception control step for controlling reception of an encryption key for acquiring said predetermined information transmitted from said other information processing apparatus based on said ticket ID and said electronic signature; and
an acquisition control step for controlling use of the encryption key received in the process of said reception control step and acquisition of said predetermined information.

12. A program for making a computer controlling an information processing apparatus for acquiring predetermined information execute:
a storage control step for controlling storage of an electronic ticket indicating the right to acquire said predetermined information;
a transmission control step for controlling transmission of a ticket ID for identifying said electronic ticket and an electronic signature for said ticket ID to a first information processing apparatus;
a reception control step for controlling reception of an encryption key for acquiring said predetermined information transmitted from said first information processing apparatus based on said ticket ID and said electronic signature; and
an acquisition control step for controlling use of the encryption key received in the process of said reception control step and acquisition of said predetermined information.

13. An information processing apparatus for managing an electronic ticket, the information processing apparatus **characterized in that** it comprises:
storage means for storing a ticket ID for identifying said electronic ticket and an encryption key that makes acquisition of predetermined information corresponding to said ticket ID possible;
reception means for receiving a ticket ID for identifying said electronic ticket and an electronic signature for said ticket ID transmitted from another information processing apparatus;
determination means for determining whether or not the electronic signature for said ticket ID is legitimate; and
transmission means for transmitting to said other information processing apparatus based on a determination result by said determination means an encryption key that makes acquisition of said predetermined information corresponding to said ticket ID possible.

14. The information processing apparatus according to claim 13, **characterized in that** said electronic ticket includes, in addition to said ticket ID, an access information ID for identifying said predetermined information that is acquirable, and an electronic signature for said ticket ID or said access information ID.

15. The information processing apparatus according to claim 14, **characterized in that** said access information ID includes a URL of said predetermined information on the Internet.

16. The information processing apparatus according to claim 13, **characterized in that** said electronic ticket includes, in addition to said ticket ID or said electronic signature, a user ID for identifying an owner of said electronic ticket.

17. The information processing apparatus according to claim 13, **characterized in that** said storage means stores, in addition to the ticket ID for identifying said electronic ticket and the encryption key that makes acquisition of the predetermined information corresponding to each said ticket ID, a status related to the acquisition of said predetermined information for each said ticket ID.

18. The information processing apparatus according to claim 17, **characterized by** further comprising status changing means for changing a status related to acquisition of said predetermined information for each said ticket ID when said transmission means transmits to said other information processing apparatus the encryption key that makes acquisition of said predetermined information corresponding to said ticket ID possible.

19. The information processing apparatus according to claim 18, **characterized in that** when said transmission means transmits to said other information processing apparatus the encryption key that makes acquisition of said predetermined information corresponding to said ticket ID possible, said status changing means changes, of statuses related to the acquisition of said predetermined information for each said ticket ID, the number of times acquisition is possible.

20. The information processing apparatus according to claim 18, **characterized in that** when said transmission means transmits to said other information processing apparatus the encryption key that makes acquisition of said predetermined information corresponding to said ticket ID possible, said status changing means changes, of statuses related to the acquisition of said predetermined information for each said ticket ID, a period during which acquisition is possible.

21. The information processing apparatus according to claim 13, **characterized in that** said storage means stores, in addition to the ticket ID for identifying said electronic ticket and the encryption key that makes acquisition of the predetermined information corresponding to each said ticket ID possible, a user ID for identifying, for each said ticket ID, an owner thereof.

22. The information processing apparatus according to claim 21, **characterized**
**in that** said electronic signature includes said user ID, and
by further comprising checking means for comparing said user ID of the user of said electronic ticket included in said electronic signature and said user ID of the owner of said electronic ticket stored in said storage means, and checking, in accordance with a comparison result, whether or not the owner and user of said electronic ticket match.

23. The information processing apparatus according to claim 22, **characterized by** further comprising:
change request reception means for receiving a change request for the user ID of the electronic ticket transmitted from said other information processing apparatus;
user ID changing means for changing the user ID of the electronic ticket stored by said storage means to an ID of another owner different from said owner in accordance with said change request.

24. The information processing apparatus according to claim 23, **characterized**
**in that** said change request reception means receives, in addition to the change request for the user ID of the electronic ticket, information on a price related to the change, and
by further comprising billing means for performing a billing based on said information on the price when said user ID changing means changes the user ID of the electronic ticket stored by said storage means to an ID of another owner different from said owner.

25. An information processing method of an information processing apparatus for managing an electronic ticket, said information
**characterized in that** it includes:
a storage step for storing a ticket ID for identifying said electronic ticket, and an encryption key that makes acquisition of predetermined information corresponding to each said ticket ID possible;
a reception step for receiving the ticket ID for identifying said electronic ticket and an electronic signature for said ticket ID transmitted from another information processing apparatus;
a determination step for determining whether or not the electronic signature for said ticket ID is legitimate; and
a transmission step for transmitting, based on a determination result in the process of said determination step, to said other information processing apparatus an encryption key that makes acquisition of said predetermined information corresponding to said ticket ID possible.

26. A recording medium on which a computer readable program for controlling an information processing apparatus for managing electronic tickets is recorded, the program **characterized in that** it includes:
a storage control step for controlling storage of a ticket ID for identifying said electronic ticket and of an encryption key that makes acquisition of predetermined information corresponding to each of said ticket IDs possible;
a reception control step for controlling reception of the ticket ID for identifying said electronic ticket and of an electronic signature for said ticket ID transmitted from another information processing apparatus;
a determination control step for controlling determination as to whether or not the electronic signature for said ticket ID is legitimate; and
a transmission control step for controlling, based on a determination result in the process of said determination control step, transmission of the encryption key that makes acquisition of said predetermined information corresponding to said ticket ID possible to said other information processing apparatus.

27. A program for making a computer for controlling an information processing apparatus for managing electronic tickets execute:
a storage control step for controlling storage of a ticket ID for identifying said electronic ticket and of an encryption key that makes acquisition of predetermined information corresponding to each of said ticket IDs possible;
a reception control step for controlling reception of the ticket ID for identifying sad electronic ticket and of an electronic signature for said ticket ID transmitted from another information processing apparatus;
a determination control step for controlling determination as to whether or not the electronic signature for said ticket ID is legitimate; and
a transmission control step for controlling, based on a determination result in the process of said determination control step, transmission of the encryption key that makes acquisition of said predetermined information corresponding to said ticket ID possible to said other information processing apparatus.

28. An information processing system comprising a first information processing apparatus for acquiring predetermined information and a second information processing apparatus for managing electronic tickets, the information processing system **characterized in that**:
said first information processing apparatus comprises,
first storage means for storing an electronic ticket indicating the right to acquire said predetermined information,
first transmission means for transmitting to the second information processing apparatus a ticket ID for identifying said electronic ticket and an electronic signature for said ticket ID,
first reception means for receiving an encryption key for acquiring said predetermined information transmitted from said second information processing apparatus based on said ticket ID and said electronic signature, and
acquisition means for acquiring said predetermined information using the encryption key received by said first reception means; and
said second information processing apparatus comprises,
second storage means for storing the ticket ID for identifying said electronic ticket and the encryption key that makes acquisition of the predetermined information corresponding to each said ticket ID possible,
second reception means for receiving the ticket ID for identifying said electronic ticket and the electronic signature for said ticket ID transmitted from said first information processing apparatus,
determination means for determining whether or not the electronic signature for said ticket ID is legitimate, and
second transmission means for transmitting, based on a determination result of said determination means, to said other information processing apparatus the encryption key that makes acquisition of said predetermined information corresponding to said ticket ID possible.
